# EUROPEAN PATENT APPLICATION

(11) **EP 4 418 550 A1**
(43) Date of publication of application: **21.08.2024**
(21) Application number: 24156459.0
(22) Date of filing: 08.02.2024
(51) Int. Cl.: H04B 7/0404, H04B 7/06, H04B 7/08

(54) **METHOD AND APPARATUS FOR PERFORMING BEAM MANAGEMENT**

(30) Priority: 17.02.2023 US 202363485746 P
(71) Applicant: Nokia Technologies Oy, 02610 Espoo (FI)
(72) Inventor: JACOBSEN, Thomas Haaning, 9400 Nørresundby (DK); KIILERICH PRATAS, Nuno Manuel, 9220 Aalborg (DK); ABREU, Renato Barbosa, 9000 Aalborg (DK); WILDSCHEK, Torsten, Gloucester, GL4 5TW (GB); MEDINA, Daniel, 80636 Munich (DE); SHIMIZU, Takayuki, Mountain View - CA, 94043 (US)
(74) Representative: Nokia EPO representatives

(57) **Abstract**

A method, apparatus, and computer readable storage medium provide sidelink beam alignment between devices. In the context of a method performed by a first user equipment (UE), the first UE causes transmission of a first plurality of reference signals to a second UE to facilitate selection of a first preferred beam among a plurality of beams of the second UE. The method also receives a second plurality of reference signals from the second UE using a plurality of beams of the first UE. The method further includes selecting a second preferred beam from the plurality of beams of the first UE based on the second plurality of reference signals.

## Description

### TECHNOLOGICAL FIELD

An example embodiment relates generally to techniques for beam sweeping, more particularly, to techniques for managing beam sweeping performed between a transmitter and a receiver so as to provide for beam alignment.

### BACKGROUND

Although New Radio (NR) sidelink (SL) was initially developed for vehicle-to-everything (V2X) applications, there is growing interest in the industry to expand the applicability of NR SL to commercial use cases. Increased SL data rate and support of new carrier frequencies for SL may be important criteria for commercial SL applications. Increased SL data rate may be motivated by applications, such as sensor information (video) sharing between vehicles with high degree of driving automation. Commercial use cases could require data rates in excess of what is possible provided by existing technology. Increased data rate can be achieved with the support of SL carrier aggregation and SL over unlicensed spectrum. Furthermore, by enhancing FR2 band (e.g., frequency band above 24.250 GHz) SL operation, increased data rate can be more efficiently supported on the FR2 bands. While the support of new carrier frequencies and larger bandwidths would also allow for improvements in data rate, a main benefit may include making SL more applicable for a wider range of applications. More specifically, with the support of unlicensed spectrum and the enhancement in the FR2 bands, SL can be in a better position to be implemented in commercial devices since utilization of the intelligent transport systems (ITS) band is limited to ITS safety related applications.

### BRIEF SUMMARY

A method, apparatus and computer readable storage medium are disclosed for providing sidelink beam alignment between user equipment devices. In this regard, the method, apparatus and system are configured to perform a beam alignment procedure using a reciprocity-based approach for selecting best transmit and receive beams that reduces the number of slots needed to complete beam alignment. By reducing the number of slots, beam alignment between user equipment devices may be performed faster, thus improving communication speeds between the user equipment devices.

In an example embodiment, an apparatus is provided that includes at least one processor and at least one memory storing instructions that, when executed by the at least one processor, cause the apparatus at least to cause transmission, by a first user equipment (UE), of a first plurality of reference signals to a second UE to facilitate selection of a first preferred beam among a plurality of beams of the second UE. The apparatus is also caused to receive a second plurality of reference signals from the second UE using a plurality of beams of the first UE. The apparatus is further caused to select a second preferred beam from the plurality of beams of the first UE based on the second plurality of reference signals.

The at least one memory and the instructions are further configured to, with the at least one processor, cause the apparatus of an example embodiment to provide an indication to the second UE informing the second UE that the first and second preferred beams are to be selected. In an example embodiment, the at least one memory and the instructions are configured to, with the at least one processor, cause the apparatus to request the second UE to transmit the second plurality of reference signals by causing transmission of an explicit request to the second UE for transmission of the second plurality of reference signals. In an alternative embodiment, the second plurality of reference signals may be received from the second UE without transmission of an explicit request.

The at least one memory and the instructions are further configured to, with the at least one processor, cause the apparatus of an example embodiment to provide an indication of one or more resources for the transmission of the first plurality of reference signals. In an example embodiment, the at least one memory and the instructions are further configured to, with the at least one processor, cause the apparatus to provide an indication of one or more resources for the transmission of the second plurality of reference signals. The at least one memory and the instructions are further configured to, with the at least one processor, cause the apparatus of an example embodiment to provide an indication as to whether a beam report is to be transmitted by the second UE. The beam report may indicate at least one of: whether the firt preferred beam is same or different compared to another preferred beam that was previously selected, and one or more beam measurements based at least on a respective received signal strength. In an example embodiment, the at least one memory and the instructions are further configured to, with the at least one processor, cause the apparatus to determine whether to transmit a third plurality of reference signals to the second UE using the plurality of beams of the first UE to facilitate selection of a third preferred beam among the plurality of beams of the first UE. The at least one memory and the instructions may be further configured to, with the at least one processor, cause the apparatus of this example embodiment to cause transmission of the third plurality of reference signals based on a beam report from the second UE and/or based on one or more beam measurements at the first UE. In an example embodiment, the apparatus may also include at least one antenna panel.

In another example embodiment, a method is provided that includes causing transmission, by a first user equipment (UE), of a first plurality of reference signals to a second UE to facilitate selection of a first preferred beam among a plurality of beams of the second UE. The method also includes receiving a second plurality of reference signals from the second UE using a plurality of beams of the first UE. The method further includes selecting a second preferred beam from the plurality of beams of the first UE based on the second plurality of reference signals.

The method of an example embodiment also includes providing an indication to the second UE informing the second UE that the first and second preferred beams are to be selected. In an example embodiment, the method requests the second UE to transmit the second plurality of reference signals by causing transmission of an explicit request to the second UE for transmission of the second plurality of reference signals. In an alternative embodiment, the second plurality of reference signals may be received from the second UE without transmission of an explicit request. The method of an example embodiment also includes providing an indication of one or more resources for the transmission of the first plurality of reference signals. In an example embodiment, the method also includes providing an indication of one or more resources for the transmission of the second plurality of reference signals. The method of an example embodiment also includes providing an indication as to whether a beam report is to be transmitted by the second UE. The beam report may indicate at least one of: whether the firt preferred beam is same or different compared to another preferred beam that was previously selected, and one or more beam measurements based at least on a respective received signal strength. In an example embodiment, the method further includes determining whether to transmit a third plurality of reference signals to the second UE using the plurality of beams of the first UE to facilitate selection of a third preferred beam among the plurality of beams of the first UE. The method of this example embodiment may also cause transmission of the third plurality of reference signals based on a beam report from the second UE and/or based on one or more beam measurements at the first UE.

In a further example embodiment, a non-transitory computer readable storage medium is provided that includes computer instructions that, when executed by an apparatus, cause the apparatus to cause transmission, by a first user equipment (UE), of a first plurality of reference signals to a second UE to facilitate selection of a first preferred beam among a plurality of beams of the second UE. The computer instructions, when executed by the apparatus, also cause the apparatus to receive a second plurality of reference signals from the second UE using a plurality of beams of the first UE. The computer instructions, when executed by the apparatus, further cause the apparatus to select a second preferred beam from the plurality of beams of the first UE based on the second plurality of reference signals.

The computer instructions, when executed by the apparatus, further cause the apparatus of an example embodiment to provide an indication to the second UE informing the second UE that the first and second preferred beams are to be selected. In an example embodiment, the instructions that, when executed by the apparatus, cause the apparatus to request the second UE to transmit the second plurality of reference signals include instructions that, when executed by the apparatus, cause the apparatus to cause transmission of an explicit request to the second UE for transmission of the second plurality of reference signals. In an alternative embodiment, the second plurality of reference signals may be received from the second UE without transmission of an explicit request.

The computer instructions, when executed by the apparatus, further cause the apparatus of an example embodiment to provide an indication of one or more resources for the transmission of the first plurality of reference signals. In an example embodiment, the computer instructions, when executed by the apparatus, further cause the apparatus to provide an indication of one or more resources for the transmission of the second plurality of reference signals. The computer instructions, when executed by the apparatus, further cause the apparatus of an example embodiment to provide an indication as to whether a beam report is to be transmitted by the second UE. The beam report may indicate at least one of: whether the firt preferred beam is same or different compared to another preferred beam that was previously selected, and one or more beam measurements based at least on a respective received signal strength. In an example embodiment, the computer instructions, when executed by the apparatus, further cause the apparatus to determine whether to transmit a third plurality of reference signals to the second UE using the plurality of beams of the first UE to facilitate selection of a third preferred beam among the plurality of beams of the first UE. The computer instructions, when executed by the apparatus of this example embodiment, may cause the apparatus to cause transmission of the third plurality of reference signals based on a beam report from the second UE and/or based on one or more beam measurements at the first UE.

In yet another example embodiment, an apparatus is provided that includes means for causing transmission, by a first user equipment (UE), of a first plurality of reference signals to a second UE to facilitate selection of a first preferred beam among a plurality of beams of the second UE. The apparatus also includes means for receiving a second plurality of reference signals from the second UE using a plurality of beams of the first UE. The apparatus further includes means for selecting a second preferred beam from the plurality of beams of the first UE based on the second plurality of reference signals.

The apparatus of an example embodiment further includes means for providing an indication to the second UE informing the second UE that the first and second preferred beams are to be selected. In an example embodiment, the means for requesting the second UE to transmit the second plurality of reference signals includes means for causing transmission of an explicit request to the second UE for transmission of the second plurality of reference signals. In an alternative embodiment, the second plurality of reference signals may be received from the second UE without transmission of an explicit request. The apparatus of an example embodiment also includes means for providing an indication of one or more resources for the transmission of the first plurality of reference signals. In an example embodiment, the apparatus further includes means for providing an indication of one or more resources for the transmission of the second plurality of reference signals. The apparatus of an example embodiment also includes means for providing an indication as to whether a beam report is to be transmitted by the second UE. The beam report may indicate at least one of: whether the firt preferred beam is same or different compared to another preferred beam that was previously selected, and one or more beam measurements based at least on a respective received signal strength. In an example embodiment, the apparatus further includes means for determining whether to transmit a third plurality of reference signals to the second UE using the plurality of beams of the first UE to facilitate selection of a third preferred beam among the plurality of beams of the first UE. The means for causing transmission of the third plurality of reference signals may make a determination based on a beam report from the second UE and/or based on one or more beam measurements at the first UE. In an example embodiment, the apparatus may also include at least one antenna panel.

In an example embodiment, an apparatus is provided that includes at least one processor and at least one memory storing instructions that, when executed by the at least one processor, cause the apparatus at least to receive a first plurality of reference signals from a first user equipment (UE) using a plurality of beams of a second UE. The apparatus is also caused to select a first preferred beam from the plurality of beams of the second UE based on the first plurality of reference signals. The apparatus is further caused to cause transmission of a second plurality of reference signals to the first UE using the first preferred beam to facilitate selection of a second preferred beam from among a plurality of beams of the first UE.

The at least one memory and the instructions are configured to, with the at least one processor, cause the apparatus of an example embodiment to determine that transmission of the second plurality of reference signals by the second UE has been requested by receiving an explicit request from the first UE for transmission of the second plurality of reference signals. In an alternative embodiment, the second plurality of reference signals may be transmitted to the first UE without reception of an explicit request from the first UE. The at least one memory and the instructions are further configured to, with the at least one processor, cause the apparatus of an example embodiment to cause transmission of a beam report to the first UE to indicate whether the first preferred beam is same or different in comparison to a preferred beam previously selected from among the plurality of beams of the second UE. In an example embodiment, the at least one memory and the instructions are further configured to, with the at least one processor, cause the apparatus to cause transmission of a beam report to the first UE to indicate one or more beam measurements based at least on a received signal strength of at least some of the first plurality of reference signals. The at least one memory and the instructions are further configured to, with the at least one processor, cause the apparatus of an example embodiment to determine whether to transmit the beam report based on at least a received signal strength of at least one of the first plurality of reference signals being below a threshold.

The at least one memory and the instructions of an example embodiment are further configured to, with the at least one processor, cause the apparatus to determine whether to transmit the beam report based on a determination of a non-line-of-sight (NLOS) channel state. In an example embodiment, the at least one memory and the instructions are further configured to, with the at least one processor, cause the apparatus to determine whether to transmit the beam report based on a determination of a presence of a reflection satisfying a predefined condition. The at least one memory and the instructions are further configured to, with the at least one processor, cause the apparatus of an example embodiment to determine whether to transmit the beam report based on a determination as to whether a channel quality measurement at the second UE has changed by more than a threshold amount from a prior channel quality measurement. In an example embodiment, the at least one memory and the instructions are further configured to, with the at least one processor, cause the apparatus to determine whether to transmit the beam report based on expiration of a beam report timer. In an example embodiment, the apparatus may also include at least one antenna panel.

In another example embodiment, a method is provided that includes receiving a first plurality of reference signals from a first user equipment (UE) using a plurality of beams of a second UE and selecting a first preferred beam from the plurality of beams of the second UE based on the first plurality of reference signals. The method also includes causing transmission of a second plurality of reference signals to the first UE using the first preferred beam to facilitate selection of a second preferred beam from among a plurality of beams of the first UE.

The method of an example embodiment determines that transmission of the second plurality of reference signals by the second UE has been requested by receiving an explicit request from the first UE for transmission of the second plurality of reference signals. In an alternative embodiment, the second plurality of reference signals may be transmitted to the first UE without reception of an explicit request from the first UE. The method of an example embodiment further includes causing transmission of a beam report to the first UE to indicate whether the first preferred beam is same or different in comparison to a preferred beam previously selected from among the plurality of beams of the second UE. In an example embodiment, the method further includes causing transmission of a beam report to the first UE to indicate one or more beam measurements based at least on a received signal strength of at least some of the first plurality of reference signals. The method of an example embodiment further includes determining whether to transmit the beam report based on at least a received signal strength of at least one of the first plurality of reference signals being below a threshold. In an example embodiment, the method further includes determining whether to transmit the beam report based on a determination of a non-line-of-sight (NLOS) channel state. The method of an example embodiment further includes determining whether to transmit the beam report based on a determination of a presence of a reflection satisfying a predefined condition. In an example embodiment, the method further comprises determining whether to transmit the beam report based on a determination as to whether a channel quality measurement at the second UE has changed by more than a threshold amount from a prior channel quality measurement. The method of an example embodiment further includes determining whether to transmit the beam report based on expiration of a beam report timer.

In a further example embodiment, a non-transitory computer readable storage medium is provided that includes computer instructions that, when executed by an apparatus, cause the apparatus to receive a first plurality of reference signals from a first user equipment (UE) using a plurality of beams of a second UE. The computer instructions, when executed by the apparatus, also cause the apparatus to select a first preferred beam from the plurality of beams of the second UE based on the first plurality of reference signals. The computer instructions, when executed by the apparatus, further cause the apparatus to cause transmission of a second plurality of reference signals to the first UE using the first preferred beam to facilitate selection of a second preferred beam from among a plurality of beams of the first UE.

The computer instructions that, when executed by the apparatus, cause the apparatus of an example embodiment to determine that transmission of the second plurality of reference signals by the second UE has been requested may include computer instructions that, when executed by the apparatus, cause the apparatus to receive an explicit request from the first UE for transmission of the second plurality of reference signals. In an alternative embodiment, the second plurality of reference signals may be transmitted to the first UE without reception of an explicit request from the first UE. The computer instructions, when executed by the apparatus, further cause the apparatus of an example embodiment to cause transmission of a beam report to the first UE to indicate whether the first preferred beam is same or different in comparison to a preferred beam previously selected from among the plurality of beams of the second UE. In an example embodiment, the computer instructions, when executed by the apparatus, further cause the apparatus to cause transmission of a beam report to the first UE to indicate one or more beam measurements based at least on a received signal strength of at least some of the first plurality of reference signals. The computer instructions, when executed by the apparatus, further cause the apparatus of an example embodiment to determine whether to transmit the beam report based on at least a received signal strength of at least one of the first plurality of reference signals being below a threshold.

The computer instructions, when executed by the apparatus, further cause the apparatus of an example embodiment to determine whether to transmit the beam report based on a determination of a non-line-of-sight (NLOS) channel state. In an example embodiment, the computer instructions, when executed by the apparatus, further cause the apparatus to determine whether to transmit the beam report based on a determination of a presence of a reflection satisfying a predefined condition. The computer instructions, when executed by the apparatus, further cause the apparatus of an example embodiment to determine whether to transmit the beam report based on a determination as to whether a channel quality measurement at the second UE has changed by more than a threshold amount from a prior channel quality measurement. In an example embodiment, the computer instructions, when executed by the apparatus, further cause the apparatus to determine whether to transmit the beam report based on expiration of a beam report timer.

In yet another example embodiment, an apparatus is provided that includes means for receiving a first plurality of reference signals from a first user equipment (UE) using a plurality of beams of a second UE and means for selecting a first preferred beam from the plurality of beams of the second UE based on the first plurality of reference signals. The apparatus further includes means for causing transmission of a second plurality of reference signals to the first UE using the first preferred beam to facilitate selection of a second preferred beam from among a plurality of beams of the first UE.

In an example embodiment, the means for determining that transmission of the second plurality of reference signals by the second UE has been requested includes means for receiving an explicit request from the first UE for transmission of the second plurality of reference signals. In an alternative embodiment, the second plurality of reference signals may be transmitted to the first UE without reception of an explicit request from the first UE. The apparatus of an example embodiment further includes means for causing transmission of a beam report to the first UE to indicate whether the first preferred beam is same or different in comparison to a preferred beam previously selected from among the plurality of beams of the second UE. In an example embodiment, the apparatus further includes means for causing transmission of a beam report to the first UE to indicate one or more beam measurements based at least on a received signal strength of at least some of the first plurality of reference signals. The apparatus of an example embodiment further includes means for determining whether to transmit the beam report based on at least a received signal strength of at least one of the first plurality of reference signals being below a threshold. In an example embodiment, the apparatus also includes means for determining whether to transmit the beam report based on a determination of a non-line-of-sight (NLOS) channel state. In an example embodiment, the apparatus further includes means for determining whether to transmit the beam report based on a determination of a presence of a reflection satisfying a predefined condition. The apparatus of an example embodiment also include means for determining whether to transmit the beam report based on a determination as to whether a channel quality measurement at the second UE has changed by more than a threshold amount from a prior channel quality measurement. In an example embodiment, the apparatus further includes means for determining whether to transmit the beam report based on expiration of a beam report timer. In an example embodiment, the apparatus may also include at least one antenna panel.

In an example embodiment, an apparatus is provided comprising at least one processor and at least one memory including computer program code with the at least one memory and the computer program code configured to, with the at least one processor, cause the apparatus at least to perform a first beam alignment phase by causing a downlink reference signal to be transmitted in a primary transmit beam using at least one antenna panel, receiving first feedback providing a measure of the downlink reference signal obtained from a sweep of a plurality of secondary receive beams by a receiver device, wherein the secondary receive beams are narrower than the primary transmit beam, and determining whether to repeat performance of the first beam alignment phase based on the first feedback. The at least one memory and the computer program code are also configured to, with the at least one processor, cause the apparatus to perform a second beam alignment phase by sweeping a plurality of primary receive beams to measure an uplink reference signal that is transmitted from the receiver device in a secondary transmit beam, and determining whether to repeat performance of the second beam alignment phase based on measurements of the uplink reference signal. The at least one memory and the computer program code are further configured to, with the at least one processor, cause the apparatus to select one of the plurality of primary receive beams based on the measurements of the plurality of primary receive beams.

The at least one memory and the computer program code are further configured to, with the at least one processor, cause the apparatus of an example embodiment to cause a second feedback to be transmitted to the receiver device based on the sweeping of the plurality of primary receive beams. The at least one memory and the computer program code are further configured to, with the at least one processor, cause the apparatus of an example embodiment to cause the apparatus to re-transmit the downlink reference signal in the primary transmit beam based on a trigger received from the receiver device that is dependent on the second feedback. The at least one memory and the computer program code are further configured to, with the at least one processor, cause the apparatus of an example embodiment to cause the apparatus to: based on the first feedback or the second feedback triggering a transmission-based beam alignment condition, (i) receive a sweep comprising a plurality of secondary transmit beams from the receiver device, (ii) select one of the plurality of secondary transmit beams based on one or more measurements of the plurality of secondary transmit beams, and (iii) report the selected secondary transmit beam to the receiver device.

The at least one memory and the computer program code are further configured to, with the at least one processor, cause the apparatus of an example embodiment to cause the apparatus to receive the first feedback based on a determination that the first feedback triggers a transmission-based beam alignment condition. In an example embodiment, the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment. In an example embodiment, the apparatus further comprises the at least one antenna panel.

The at least one memory and the computer program code are further configured to, with the at least one processor, cause the apparatus of an example embodiment to cause the apparatus to transmit a first plurality of reference signals to the receiver device, wherein each reference signal of the first plurality of reference signals is receivable by the receiver device using a secondary beam of a plurality of secondary beams of the receiver device, receive each reference signal of the second plurality of reference signals using a primary beam of a plurality of primary beams of the apparatus, and select a second preferred primary beam from the plurality of primary beams of the apparatus device based on the received second plurality of reference signals. In an example embodiment, a first preferred secondary beam is selected from the plurality of secondary beams by the receiver device based on the received first plurality of reference signals. The at least one memory and the computer program code are further configured to, with the at least one processor, cause the apparatus of an example embodiment to cause the apparatus to receive a second plurality of reference signals via the selected first preferred secondary beam.

The at least one memory and the computer program code are further configured to, with the at least one processor, cause the apparatus of an example embodiment to cause the apparatus to indicate at least one of: the performance of actions associated the first plurality of reference signals and the second plurality of reference signals, a request for transmission of the second plurality of reference signals by the receiver device, resources for transmission of the first plurality of reference signals by the apparatus, resources for transmission of the second plurality of reference signals by the receiver device, and whether the receiver device is to transmit a beam report. The at least one memory and the computer program code are further configured to, with the at least one processor, cause the apparatus of an example embodiment to cause the apparatus to receive a beam report from the receiver device indicating at least one of: comprising whether the selected first preferred secondary beam is same or different compared to an earlier one preferred secondary beam from the plurality of secondary beams, such as via the physical sidelink feedback channel (PSFCH), and one or more beam measurements based at least on a respective received signal strength measured by the receiver device on at least some of the received first plurality of reference signals, such as via a media access control (MAC) control element (CE).

The at least one memory and the computer program code are further configured to, with the at least one processor, cause the apparatus of an example embodiment to cause the apparatus to receive a beam report based on at least one of: a received signal strength measured by the receiver device on at least one of the first plurality of reference signals being below a threshold, the receiver device having determined a non-line-of-sight channel state, the receiver device having determined the presence of a strong reflection, a channel quality measurement at the receiver device having changed compared to an earlier measurement beyond a threshold, or a beam report timer expiring. The at least one memory and the computer program code are further configured to, with the at least one processor, cause the apparatus of an example embodiment to cause the apparatus to determine whether to trigger a beam pairing procedure based on transmit beam sweeping based on at least one of: a beam report received from the receiver device, or one or more beam measurements at the apparatus.

In another example embodiment, a method is provided that comprises performing a first beam alignment phase by: causing a downlink reference signal to be transmitted in a primary transmit beam using at least one antenna panel, receiving first feedback providing a measure of the downlink reference signal obtained from a sweep of a plurality of secondary receive beams by a receiver device, wherein the secondary receive beams are narrower than the primary transmit beam, and determining whether to repeat performance of the first beam alignment phase based on the first feedback. The method further comprises performing a second beam alignment phase by: sweeping a plurality of primary receive beams to measure an uplink reference signal that is transmitted from the receiver device in a secondary transmit beam, and determining whether to repeat performance of the second beam alignment phase based on measurements of the uplink reference signal. The method further comprises selecting one of the plurality of primary receive beams based on the measurements of the plurality of primary receive beams.

The method of an example embodiment further comprises causing a second feedback to be transmitted to the receiver device based on the sweeping of the plurality of primary receive beams. The method of an example embodiment further comprises re-transmitting the downlink reference signal in the primary transmit beam based on a trigger received from the receiver device that is dependent on the second feedback. The method of an example embodiment further comprises, based on the first feedback or the second feedback triggering a transmission-based beam alignment condition, (i) receiving a sweep comprising a plurality of secondary transmit beams from the receiver device, (ii) selecting one of the plurality of secondary transmit beams based on one or more measurements of the plurality of secondary transmit beams, and (iii) reporting the selected secondary transmit beam to the receiver device.

The method of an example embodiment further comprises receiving the first feedback based on a determination that the first feedback triggers a transmission-based beam alignment condition. The method of an example embodiment wherein the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

The method of an example embodiment further comprises transmitting a first plurality of reference signals to the receiver device, wherein each reference signal of the first plurality of reference signals is receivable by the receiver device using a secondary beam of a plurality of secondary beams of the receiver device, receiving each reference signal of the second plurality of reference signals using a primary beam of a plurality of primary beams, and selecting a second preferred primary beam from the plurality of primary beams based on the received second plurality of reference signals. The method of an example embodiment wherein a first preferred secondary beam is selected from the plurality of secondary beams by the receiver device based on the received first plurality of reference signals. The method of an example embodiment further comprises receiving a second plurality of reference signals via the selected first preferred secondary beam.

The method of an example embodiment further comprises indicating at least one of: requiring the performance of actions associated the first plurality of reference signals and the second plurality of reference signals, a request for transmission of the second plurality of reference signals by the receiver device, resources for transmission of the first plurality of reference signals by the transmitter device, resources for transmission of the second plurality of reference signals by the receiver device, and whether the receiver device is to transmit a beam report. The method of an example embodiment further comprises receiving a beam report from the receiver device indicating at least one of: whether the selected first preferred secondary beam is same or different compared to an earlier one preferred secondary beam from the plurality of secondary beams, such as via the PSFCH, and one or more beam measurements based at least on a respective received signal strength measured by the receiver device on at least some of the received first plurality of reference signals, such as via the MAC CE. The method of an example embodiment further comprises receiving a beam report based on at least one of: a received signal strength measured by the receiver device on at least one of the first plurality of reference signals being below a threshold, the receiver device having determined a non-line-of-sight channel state, the receiver device having determined the presence of a strong reflection, a channel quality measurement at the receiver device having changed compared to an earlier measurement beyond a threshold, or a beam report timer expiring. The method of an example embodiment further comprises determining whether to trigger a beam pairing procedure based on transmit beam sweeping based on at least one of: a beam report received from the receiver device, or one or more beam measurements at the transmitter device.

In a further example embodiment, a non-transitory computer readable storage medium comprising computer instructions that, when executed by an apparatus, cause the apparatus to perform a first beam alignment phase by: causing a downlink reference signal to be transmitted in a primary transmit beam using at least one antenna panel, receiving first feedback providing a measure of the downlink reference signal obtained from a sweep of a plurality of secondary receive beams by a receiver device, wherein the secondary receive beams are narrower than the primary transmit beam, and determining whether to repeat performance of the first beam alignment phase based on the first feedback. The non-transitory computer readable storage medium further comprising computer instructions that, when executed by an apparatus, cause the apparatus to perform a second beam alignment phase by: sweeping a plurality of primary receive beams to measure an uplink reference signal that is transmitted from the receiver device in a secondary transmit beam, and determining whether to repeat performance of the second beam alignment phase based on measurements of the uplink reference signal. The non-transitory computer readable storage medium also comprising computer instructions that, when executed by an apparatus, cause the apparatus to select one of the plurality of primary receive beams based on the measurements of the plurality of primary receive beams.

The non-transitory computer readable storage medium of an example embodiment also comprises program code instructions configured, upon execution, to cause a second feedback to be transmitted to the receiver device based on the sweeping of the plurality of primary receive beams. The non-transitory computer readable storage medium of an example embodiment also comprises program code instructions configured, upon execution, to re-transmit the downlink reference signal in the primary transmit beam based on a trigger received from the receiver device that is dependent on the second feedback.

The non-transitory computer readable storage medium of an example embodiment also comprises program code instructions configured, upon execution, to, based on the first feedback or the second feedback triggering a transmission-based beam alignment condition, (i) receive a sweep comprising a plurality of secondary transmit beams from the receiver device, (ii) select one of the plurality of secondary transmit beams based on one or more measurements of the plurality of secondary transmit beams, and (iii) report the selected secondary transmit beam to the receiver device. The non-transitory computer readable storage medium of an example embodiment also comprises program code instructions configured, upon execution, to receive the first feedback based on a determination that the first feedback triggers a transmission-based beam alignment condition.

The non-transitory computer readable storage medium of an example embodiment wherein the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

The non-transitory computer readable storage medium of an example embodiment also comprises program code instructions configured, upon execution, to, transmit a first plurality of reference signals to the receiver device, wherein each reference signal of the first plurality of reference signals is receivable by the receiver device using a secondary beam of a plurality of secondary beams of the receiver device, receive each reference signal of the second plurality of reference signals using a primary beam of a plurality of primary beams, and select a second preferred primary beam from the plurality of primary beams based on the received second plurality of reference signals. The non-transitory computer readable storage medium of an example embodiment wherein a first preferred secondary beam is selected from the plurality of secondary beams by the receiver device based on the received first plurality of reference signals. The non-transitory computer readable storage medium of an example embodiment also comprises program code instructions configured, upon execution, to receive a second plurality of reference signals via the selected first preferred secondary beam.

The non-transitory computer readable storage medium of an example embodiment also comprises program code instructions configured, upon execution, to indicate at least one of: requiring the performance of actions associated the first plurality of reference signals and the second plurality of reference signals, a request for transmission of the second plurality of reference signals by the receiver device, resources for transmission of the first plurality of reference signals by the transmitter device, resources for transmission of the second plurality of reference signals by the receiver device, and whether the receiver device is to transmit a beam report. The non-transitory computer readable storage medium of an example embodiment also comprises program code instructions configured, upon execution, to receive a beam report from the receiver device indicating at least one of: whether the selected first preferred secondary beam is same or different compared to an earlier one preferred secondary beam from the plurality of secondary beams, such as via the PSFCH, and one or more beam measurements based at least on a respective received signal strength measured by the receiver device on at least some of the received first plurality of reference signals, such as via the MAC CE. The non-transitory computer readable storage medium of an example embodiment also comprises program code instructions configured, upon execution, to receive a beam report based on at least one of: a received signal strength measured by the receiver device on at least one of the first plurality of reference signals being below a threshold, the receiver device having determined a non-line-of-sight channel state, the receiver device having determined the presence of a strong reflection, a channel quality measurement at the receiver device having changed compared to an earlier measurement beyond a threshold, or a beam report timer expiring. The non-transitory computer readable storage medium of an example embodiment also comprises program code instructions configured, upon execution, to determine whether to trigger a beam pairing procedure based on transmit beam sweeping based on at least one of: a beam report received from the receiver device, or one or more beam measurements at the transmitter device.

In a further example embodiment, an apparatus comprises means for performing a first beam alignment phase by: causing a downlink reference signal to be transmitted in a primary transmit beam using at least one antenna panel, receiving first feedback providing a measure of the downlink reference signal obtained from a sweep of a plurality of secondary receive beams by a receiver device, wherein the secondary receive beams are narrower than the primary transmit beam, and determining whether to repeat performance of the first beam alignment phase based on the first feedback. The apparatus further comprises means for performing a second beam alignment phase by: sweeping a plurality of primary receive beams to measure an uplink reference signal that is transmitted from the receiver device in a secondary transmit beam, and determining whether to repeat performance of the second beam alignment phase based on measurements of the uplink reference signal. The apparatus further comprises means for selecting one of the plurality of primary receive beams based on the measurements of the plurality of primary receive beams.

The apparatus of an example embodiment further comprises means for causing a second feedback to be transmitted to the receiver device based on the sweeping of the plurality of primary receive beams. The apparatus of an example embodiment further comprises means for re-transmitting the downlink reference signal in the primary transmit beam based on a trigger received from the receiver device that is dependent on the second feedback. The apparatus of an example embodiment further comprises means for, based on the first feedback or the second feedback triggering a transmission-based beam alignment condition, (i) receiving a sweep comprising a plurality of secondary transmit beams from the receiver device, (ii) selecting one of the plurality of secondary transmit beams based on one or more measurements of the plurality of secondary transmit beams, and (iii) reporting the selected secondary transmit beam to the receiver device.

The apparatus of an example embodiment further comprises means for receiving the first feedback based on a determination that the first feedback triggers a transmission-based beam alignment condition. The apparatus of an example embodiment wherein the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

The apparatus of an example embodiment further comprises means for transmitting a first plurality of reference signals to the receiver device, wherein each reference signal of the first plurality of reference signals is receivable the receiver device using a secondary beam of a plurality of secondary beams of the receiver device, receiving each reference signal of the second plurality of reference signals using a primary beam of a plurality of primary beams, and selecting a second preferred primary beam from the plurality of primary beams based on the received second plurality of reference signals. The apparatus of an example embodiment wherein a first preferred secondary beam is selected from the plurality of secondary beams by the receiver device based on the received first plurality of reference signals. The apparatus of an example embodiment further comprises means for receiving a second plurality of reference signals via the selected first preferred secondary beam.

The apparatus of an example embodiment further comprises means for indicating at least one of: requiring the performance of actions associated with the first plurality of reference signals and the second plurality of reference signals, a request for transmission of the second plurality of reference signals by the receiver device, resources for transmission of the first plurality of reference signals by the transmitter device, resources for transmission of the second plurality of reference signals by the receiver device, and whether the receiver device is to transmit a beam report. The apparatus of an example embodiment further comprises means for receiving a beam report from the receiver device indicating at least one of: whether the selected first preferred secondary beam is same or different compared to an earlier one preferred secondary beam from the plurality of secondary beams, such as via the PSFCH, and one or more beam measurements based at least on a respective received signal strength measured by the receiver device on at least some of the received first plurality of reference signals, such as via the MAC CE. The apparatus of an example embodiment further comprises means for receiving a beam report based on at least one of: a received signal strength measured by the receiver device on at least one of the first plurality of reference signals being below a threshold, the receiver device having determined a non-line-of-sight channel state, the receiver device having determined the presence of a strong reflection, a channel quality measurement at the receiver device having changed compared to an earlier measurement beyond a threshold, or a beam report timer expiring. The apparatus of an example embodiment further comprises means for determining whether to trigger a beam pairing procedure based on transmit beam sweeping based on at least one of: a beam report received from the receiver device, or one or more beam measurements at the transmitter device.

In a further example embodiment, an apparatus is provided comprising at least one processor and at least one memory including computer program code with the at least one memory and the computer program code configured to, with the at least one processor, cause the apparatus at least to perform a first beam alignment phase by: sweeping a plurality of secondary receive beams to measure a downlink reference signal that is transmitted by a transmitter device in a primary transmit beam, wherein the secondary receive beams are narrower than the primary transmit beam, and causing first feedback based on the sweeping of the plurality of secondary receive beams to be transmitted to the transmitter device to permit determination of whether performance of the first beam alignment phase is to be repeated. The at least one memory and the computer program code are also configured to, with the at least one processor, cause the apparatus to perform a second beam alignment phase by selecting one of a plurality of secondary transmit beams based on one or more measurements of the downlink reference signal using the plurality of secondary transmit beams, and repeatedly transmitting an uplink reference signal in the selected secondary transmit beam.

The at least one memory and the computer program code are further configured to, with the at least one processor, cause the apparatus of an example embodiment to cause the apparatus to perform the second beam alignment phase by receiving second feedback based on the sweep of the plurality of primary receive beams. The at least one memory and the computer program code are further configured to, with the at least one processor, cause the apparatus of an example embodiment to cause the apparatus to cause a trigger to be transmitted based on the second feedback to cause re-transmission of the downlink reference signal from the transmitter device in the primary transmit beam.

The at least one memory and the computer program code are further configured to, with the at least one processor, cause the apparatus of an example embodiment to, based on the first feedback or the second feedback triggering a transmission-based beam alignment condition, (i) sweep a plurality of secondary transmit beams, and (ii) receive an indication of a selection of one of the plurality of secondary transmit beams from the transmitter device. The at least one memory and the computer program code are further configured to, with the at least one processor, cause the apparatus of an example embodiment to cause the first feedback to be transmitted based on a determination that the first feedback triggers a transmission-based beam alignment condition. The apparatus of an example embodiment wherein the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

The at least one memory and the computer program code are further configured to, with the at least one processor, cause the apparatus of an example embodiment to receive a first plurality of reference signals from the transmitter device wherein each reference signal of the first plurality of reference signals is received using a secondary beam of a plurality of secondary beams, select a first preferred secondary beam from the plurality of secondary beams based on the received first plurality of reference signals, and transmit a second plurality of reference signals to the transmitter device using the selected first preferred secondary beam, wherein the transmitter device receives each reference signal of the second plurality of reference signals using a primary beam of a plurality of primary beams of the transmitter device. The apparatus of an example embodiment, wherein a second preferred primary beam is selected from the plurality of primary beams by the transmitter device based on the received second plurality of reference signals.

The at least one memory and the computer program code are further configured to, with the at least one processor, cause the apparatus of an example embodiment to transmit a beam report to the transmitter device indicating at least one of: whether the selected first preferred secondary beam is same or different compared to an earlier one preferred secondary beam from the plurality of secondary beams, such as via the PSFCH, and one or more beam measurements based at least on a respective received signal strength measured by the receiver device on at least some of the received first plurality of reference signals, such as via the MAC CE. The at least one memory and the computer program code are further configured to, with the at least one processor, cause the apparatus of an example embodiment to transmit a beam report based on at least one of: a signal strength measurement of at least one of the received first plurality of reference signals is below a threshold, a determination of a non-line-of-sight channel state, a determination of a presence of a strong reflection, a channel quality measurement has changed compared to an earlier measurement beyond a threshold, and a beam report timer expires. The at least one memory and the computer program code are further configured to, with the at least one processor, cause the apparatus of an example embodiment to determine whether to trigger a beam pairing procedure based on transmit beam sweeping based on at least one of a beam report, and one or more beam measurements.

In another example embodiment, a method is provided that comprises performing a first beam alignment phase by sweeping a plurality of secondary receive beams to measure a downlink reference signal that is transmitted by a transmitter device in a primary transmit beam, wherein the secondary receive beams are narrower than the primary transmit beam, and causing first feedback based on the sweeping of the plurality of secondary receive beams to be transmitted to the transmitter device to permit determination of whether performance of the first beam alignment phase is to be repeated. The method further comprises performing a second beam alignment phase by: selecting one of a plurality of secondary transmit beams based on one or more measurements of the downlink reference signal using the plurality of secondary transmit beams, and repeatedly transmitting an uplink reference signal in the selected secondary transmit beam.

The method of an example embodiment further comprises performing the second beam alignment phase by receiving second feedback based on the sweep of the plurality of primary receive beams. The method of an example embodiment further comprises transmitting a trigger based on the second feedback to cause re-transmission of the downlink reference signal from the transmitter device in the primary transmit beam. The method of an example embodiment further comprises, based on the first feedback or the second feedback triggering a transmission-based beam alignment condition, (i) sweeping a plurality of secondary transmit beams, and (ii) receiving an indication of a selection of one of the plurality of secondary transmit beams from the transmitter device.

The method of an example embodiment further comprises transmitting the first feedback based on a determination that the first feedback triggers a transmission-based beam alignment condition. The method of an example embodiment wherein the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

The method of an example embodiment further comprises receiving a first plurality of reference signals from the transmitter device wherein each reference signal of the first plurality of reference signals is received using a secondary beam of a plurality of secondary beams, selecting a first preferred secondary beam from the plurality of secondary beams based on the received first plurality of reference signals, and transmitting a second plurality of reference signals to the transmitter device using the selected first preferred secondary beam, wherein the transmitter device receives each reference signal of the second plurality of reference signals using a primary beam of a plurality of primary beams of the transmitter device. The method of an example embodiment wherein a second preferred primary beam is selected from the plurality of primary beams by the transmitter device based on the received second plurality of reference signals.

The method of an example embodiment further comprises transmitting a beam report to the transmitter device indicating at least one of: whether the selected first preferred secondary beam is same or different compared to an earlier one preferred secondary beam from the plurality of secondary beams, such as via the PSFCH, and one or more beam measurements based at least on a respective received signal strength measured by the receiver device on at least some of the received first plurality of reference signals, such as via the MAC CE. The method of an example embodiment further comprises transmitting a beam report based on at least one of: a signal strength measurement of at least one of the received first plurality of reference signals is below a threshold, a determination of a non-line-of-sight channel state, a determination of a presence of a strong reflection, a channel quality measurement has changed compared to an earlier measurement beyond a threshold, and a beam report timer expires. The method of an example embodiment further comprises determining whether to trigger a beam pairing procedure based on transmit beam sweeping based on at least one of a beam report, and one or more beam measurements.

In a further example embodiment, a non-transitory computer readable storage medium comprising computer instructions that, when executed by an apparatus, cause the apparatus to perform a first beam alignment phase by: sweeping a plurality of secondary receive beams to measure a downlink reference signal that is transmitted by a transmitter device in a primary transmit beam, wherein the secondary receive beams are narrower than the primary transmit beam, and causing first feedback based on the sweeping of the plurality of secondary receive beams to be transmitted to the transmitter device to permit determination of whether performance of the first beam alignment phase is to be repeated. The non-transitory computer readable storage medium further comprising computer instructions that, when executed by an apparatus, cause the apparatus to perform a second beam alignment phase by: selecting one of a plurality of secondary transmit beams based on one or more measurements of the downlink reference signal using the plurality of secondary transmit beams, and repeatedly transmitting an uplink reference signal in the selected secondary transmit beam.

The non-transitory computer readable storage medium of an example embodiment also comprises program code instructions configured, upon execution, cause the apparatus to perform the second beam alignment phase by receiving second feedback based on the sweep of the plurality of primary receive beams. The non-transitory computer readable storage medium of an example embodiment also comprises program code instructions configured, upon execution, cause the apparatus to cause a trigger to be transmitted based on the second feedback to cause re-transmission of the downlink reference signal from the transmitter device in the primary transmit beam. The non-transitory computer readable storage medium of an example embodiment also comprises program code instructions configured, upon execution, cause the apparatus to, based on the first feedback or the second feedback triggering a transmission-based beam alignment condition, (i) sweep a plurality of secondary transmit beams, and (ii) receive an indication of a selection of one of the plurality of secondary transmit beams from the transmitter device.

The non-transitory computer readable storage medium of an example embodiment also comprises program code instructions configured, upon execution, cause the apparatus to cause the first feedback to be transmitted based on a determination that the first feedback triggers a transmission-based beam alignment condition. The non-transitory computer readable storage medium of an example embodiment wherein the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

The non-transitory computer readable storage medium of an example embodiment also comprises program code instructions configured, upon execution, cause the apparatus to receive a first plurality of reference signals from the transmitter device wherein each reference signal of the first plurality of reference signals is received using a secondary beam of a plurality of secondary beams, select a first preferred secondary beam from the plurality of secondary beams based on the received first plurality of reference signals, and transmit a second plurality of reference signals to the transmitter device using the selected first preferred secondary beam, wherein the transmitter device receives each reference signal of the second plurality of reference signals using a primary beam of a plurality of primary beams of the transmitter device. The non-transitory computer readable storage medium of an example embodiment wherein a second preferred primary beam is selected from the plurality of primary beams by the transmitter device based on the received second plurality of reference signals.

The non-transitory computer readable storage medium of an example embodiment also comprises program code instructions configured, upon execution, cause the apparatus to transmit a beam report to the transmitter device indicating at least one of: whether the selected first preferred secondary beam is same or different compared to an earlier one preferred secondary beam from the plurality of secondary beams, such as via the PSFCH, and one or more beam measurements based at least on a respective received signal strength measured by the receiver device on at least some of the received first plurality of reference signals, such as via the MAC CE. The non-transitory computer readable storage medium of an example embodiment also comprises program code instructions configured, upon execution, cause the apparatus to cause the apparatus to transmit a beam report based on at least one of: a signal strength measurement of at least one of the received first plurality of reference signals is below a threshold, a determination of a non-line-of-sight channel state, a determination of a presence of a strong reflection, a channel quality measurement has changed compared to an earlier measurement beyond a threshold, and a beam report timer expires. The non-transitory computer readable storage medium of an example embodiment also comprises program code instructions configured, upon execution, cause the apparatus to determine whether to trigger a beam pairing procedure based on transmit beam sweeping based on at least one of a beam report, and one or more beam measurements.

In a further example embodiment, an apparatus comprises means for performing a first beam alignment phase by: sweeping a plurality of secondary receive beams to measure a downlink reference signal that is transmitted by a transmitter device in a primary transmit beam, wherein the secondary receive beams are narrower than the primary transmit beam, and causing first feedback based on the sweeping of the plurality of secondary receive beams to be transmitted to the transmitter device to permit determination of whether performance of the first beam alignment phase is to be repeated. The apparatus may further comprise means for performing a second beam alignment phase by: selecting one of a plurality of secondary transmit beams based on one or more measurements of the downlink reference signal using the plurality of secondary transmit beams, and repeatedly transmitting an uplink reference signal in the selected secondary transmit beam.

The apparatus of an example embodiment further comprises means for performing the second beam alignment phase by receiving second feedback based on the sweep of the plurality of primary receive beams. The apparatus of an example embodiment further comprises means for causing a trigger to be transmitted based on the second feedback to cause re-transmission of the downlink reference signal from the transmitter device in the primary transmit beam. The apparatus of an example embodiment further comprises means for, based on the first feedback or the second feedback triggering a transmission-based beam alignment condition, (i) sweep a plurality of secondary transmit beams, and (ii) receive an indication of a selection of one of the plurality of secondary transmit beams from the receiver device.

The apparatus of an example embodiment further comprises means for causing the first feedback to be transmitted based on a determination that the first feedback triggers a transmission-based beam alignment condition. The apparatus of an example embodiment wherein the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

The apparatus of an example embodiment further comprises means for receiving a first plurality of reference signals from the transmitter device wherein each reference signal of the first plurality of reference signals is received using a secondary beam of a plurality of secondary beams, selecting a first preferred secondary beam from the plurality of secondary beams based on the received first plurality of reference signals, and transmitting a second plurality of reference signals to the transmitter device using the selected first preferred secondary beam, wherein the transmitter device receives each reference signal of the second plurality of reference signals using a primary beam of a plurality of primary beams of the transmitter device. The apparatus of an example embodiment wherein a second preferred primary beam is selected from the plurality of primary beams by the transmitter device based on the received second plurality of reference signals.

The apparatus of an example embodiment further comprises means for transmitting a beam report to the transmitter device indicating at least one of: whether the selected first preferred secondary beam is same or different compared to an earlier one preferred secondary beam from the plurality of secondary beams, such as via the PSFCH, and one or more beam measurements based at least on a respective received signal strength measured by the receiver device on at least some of the received first plurality of reference signals, such as via the MAC CE. The apparatus of an example embodiment further comprises means for transmitting a beam report based on at least one of: a signal strength measurement of at least one of the received first plurality of reference signals is below a threshold, a determination of a non-line-of-sight channel state, a determination of a presence of a strong reflection, a channel quality measurement has changed compared to an earlier measurement beyond a threshold, and a beam report timer expires. The apparatus of an example embodiment further comprises means for determining whether to trigger a beam pairing procedure based on transmit beam sweeping based on at least one of: a beam report, or one or more beam measurements.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
Figure 1 is an example diagram of a New Radio sidelink communication system;
Figure 2 is an example diagram of resource selection by a sidelink transmitter user equipment;
Figure 3 is an example sidelink slot structure format;
Figure 4 is a block diagram of a system including a transmitter, a receiver, and a processing element that provides signals to and receives signals from the transmitter and receiver correspondingly in accordance with an example embodiment;
Figure 5 is a block diagram of an example communication system in which the system of Figure 4 may be deployed;
Figure 6 is a block diagram of an apparatus that may be specifically configured in accordance with an example embodiment of the present disclosure;
Figure 7 is a signal diagram of an example unique user beam alignment procedure;
Figure 8 is a signal diagram of a sidelink beam alignment procedure in accordance with an example embodiment of the present disclosure;
Figure 9 is a signal diagram of a reciprocity-based sidelink beam alignment procedure in accordance with another example embodiment of the present disclosure;
Figure 10 is a data flow diagram of a reciprocity-based sidelink beam alignment procedure in accordance with an example embodiment of the present disclosure;
Figure 11 is a diagram of a determination of a pair of beams for communication between user equipment devices in accordance with an example embodiment;
Figure 12 is a flow chart illustrating operations performed by first user equipment in accordance with an example embodiment, such as depicted in Figure 11;
Figure 13 is a flow chart illustrating operations performed by second user equipment in accordance with an example embodiment, such as depicted in Figure 11;
Figure 14 is a flow chart illustrating the operations performed by a transmitter device in order to perform a beam alignment procedure in accordance with an example embodiment;
Figure 15 is a flow chart illustrating the operations performed by a receiver device in order to perform a beam alignment procedure in accordance with an example embodiment; and
Figures 16A and 16B are diagrams of sidelink beam alignment in the presence of obstructions.

### DETAILED DESCRIPTION

Some embodiments of the present disclosure will now be described more fully hereinafter with reference to the accompanying drawings, in which some, but not all, embodiments are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms should not be taken to limit the spirit and scope of embodiments of the present disclosure.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

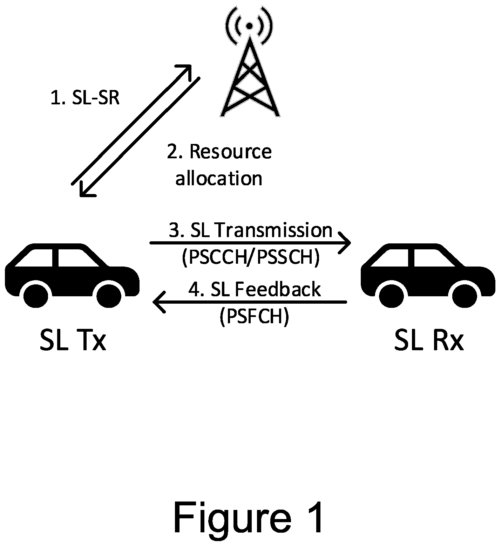

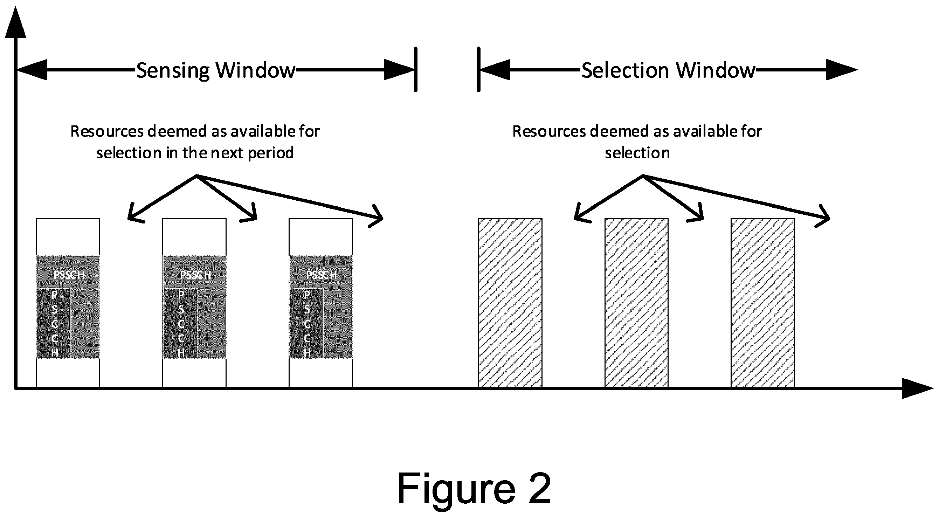

NR SL may facilitate a user equipment (UE) to communicate with other nearby UE(s) via direct/SL communication. As an example, two resource allocation modes, NR SL mode 1 and NR SL mode 2, may be configured where a SL transmitter UE may be configured with one of them to perform its NR SL transmissions. Figure 1 depicts the NR SL mode 1. In NR SL mode 1, a SL transmission resource may be assigned (scheduled) by a network (e.g., a base station) to a SL transmitter UE. A SL transmitter UE in mode 2 may autonomously select its SL transmission resources, as depicted in Figure 2.

Time resources such as slots within a SL resource pool may be configured to define the minimum information, such as number of sub-channels, number of physical resource blocks per sub-channels, number of symbols in the Physical Sidelink Control Channel (PSCCH), which slots have a Physical Sidelink Feedback Channel (PSFCH) and other configuration aspects, required for a receiver UE to be able to decode a transmission. However, the details of the actual SL transmission (e.g., the payload) may be provided in the PSCCH (1^{st}-stage Sidelink Control Information (SCI)) for each individual transmission, which may include time and frequency resources, a DeModulation Reference Signal (DMRS) configuration of the PSSCH, the Modulation and Coding Scheme (MCS), PSFCH, among others.

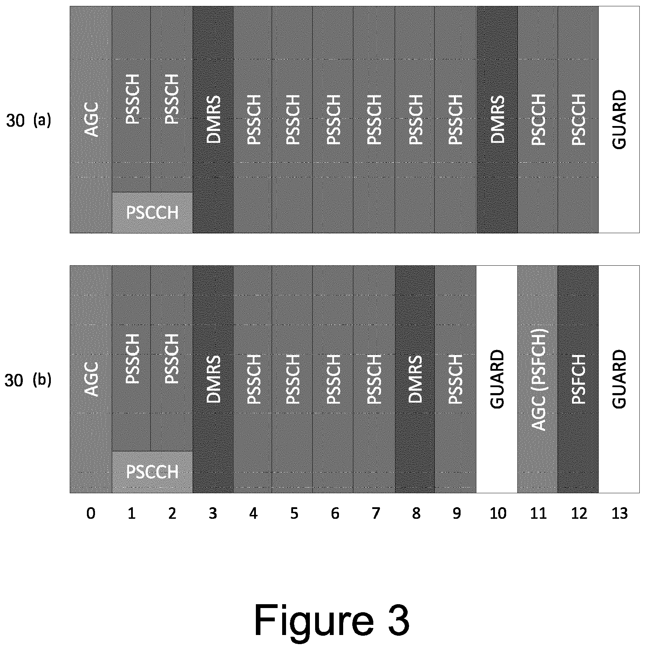

Some examples of SL slot structure formats are depicted in Figure 3. Figure 3 depicts a SL slot format 30 (a) with PSCCH/PSSCH and a SL slot format 30 (b) with PSCCH/PSSCH where the last symbols are used for PSFCH. A slot structure may comprise a plurality of reference signals associated with sub-intervals of time for transmitting data. The configuration of the PSCCH (e.g., DMRS, MCS, number of symbols used) may comprise part of a resource pool configuration. Furthermore, the indication of which slots have PSFCH symbols may also comprise part of the resource pool configuration.

The configuration of the PSSCH (e.g., the number of symbols used, the DMRS pattern and the MCS) is provided by the 1^{st}-stage SCI which comprises the payload sent within the PSCCH, as shown in Table 1.

### Table 8.4.1.1.2-1: PSSCH DM-RS time-domain location.

**Table 1**

| *l_{d}* **in symbols** | **DM-RS position***l̅* | | | | | |
|---|---|---|---|---|---|---|
| | **PSCCH duration 2 symbols** | | | **PSCCH duration 3 symbols** | | |
| | **Number of PSSCH DM-RS** | | | **Number of PSSCH DM-RS** | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

To receive a transmission, a receiver UE is expected to set the gain in its receive chain (receiver gain) correctly. If the gain is set too low, then the dynamic range of the receive analog-to-digital converter (ADC) may not be fully utilized, resulting in increased quantization noise. If the gain is set too high, then the ADC may saturate and signals may be clipped, resulting in clipping noise. For example, a conventional SL communication procedure performed by a SL receiving UE may comprise measuring a received signal strength in a first portion of a transmission (e.g., Automatic Gain Control (AGC)), setting the receive gain based on the measurement of the received signal strength, and maintaining the receive gain for the remainder of the transmission. Using SL slot format 30 (a), the receiving UE may set receive gain during symbol 0 (AGC), and the gain remains unchanged for the rest of the slot. As such, the SL slot format relies on an assumption that the total received power during the entirety of a slot will remain approximately constant.

However, in certain instances, a plurality of UEs may perform SL transmission at the same time, and the power received by a UE may be a superposition of transmissions from the plurality of UEs. Accordingly, when performing a transmit beam sweep during a beam management procedure, a transmitter beam may not be switched within a slot without potentially violating the assumption that the total receive power remains approximately constant during a slot when accounting for other UEs not directly involved in the beam management procedure. A beam management procedure for SL communications is therefore provided in accordance with an example embodiment for addressing the foregoing.

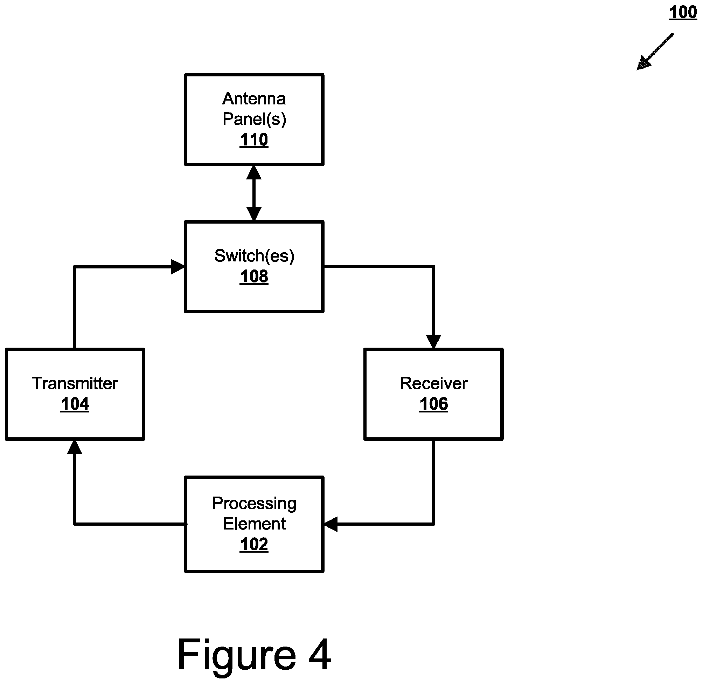

As illustrated in Figure 4, a system 100 is provided in accordance with an example embodiment that includes a transmitter 104, a receiver 106, and a processing element 102 that provides signals to and receives signals from the transmitter 104 and receiver 106, correspondingly. The signals provided to and received from the transmitter 104 and the receiver 106, correspondingly, may include signaling information/data in accordance with standards of applicable wireless systems. By way of example, the system 100 may be deployed within a radio access architecture based on long term evolution advanced (LTE Advanced, LTE-A) or new radio (NR, 5G). However, the system may be deployed in other applications including within other communication networks including, for example, a universal mobile telecommunications system (UMTS) radio access network (UTRAN or E-UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

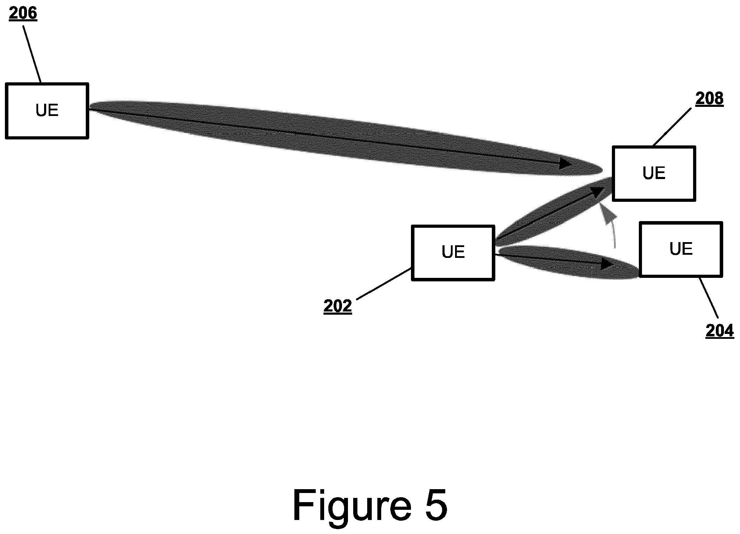

The data that is transmitted between the processing element 102 and the transmitter 104 or the receiver 106 can be any of a wide variety of data including, but not limited to digital imagery data including video data, audio data as well as data provided by sensors, radars, telescopes and radio receivers. In at least some instances, the processing element 102 may encode data prior to communication of the data to the transmitter 104 and decode data received from the receiver 106. The resulting data received by the receiver 106 may be utilized for a variety of purposes including presentation to a user, storage of the data and/or provision of the data to one or more applications, such as applications that perform statistical inference on the data for various purposes including object recognition, image classification, spectrum sensing, speech transcription and/or prediction or detection of events. Although depicted in Figure 5 in the form of separate elements, the transmitter 104 and the receiver 104 may be embodied as a single device, such as a transceiver or the like, that includes both a transmitter and a receiver, thereby supporting bidirectional communication.

System 100 further includes one or more switches 108 and one or more antenna panels 110. The one or more switches 108 are coupled to transmitter 104 and receiver 106. The one or more switches 108 may comprise circuits and logic configured for routing data from transmitter 104 to the one or more antenna panels 110 for transmission and routing reception of data from the one or more antenna panels 110 to receiver 106. In an example embodiment, system 100 may be configured in SL operation and able to transmit and receive in a plurality of directions simultaneously. A given one of the one or more antenna panels 110 may comprise at least one polarized antenna patch element. In some embodiments, the one or more switches 108 may be configured to switch polarization of the one or more antenna panels 110 according to switching scheme or logic, such as an antenna array switching scheme. The one or more antenna panels 110 may comprise an array of antenna elements controllable by the one or more switches 108 to generate one or more beams of radio waves that can be electronically steered to point in one or more directions. As an example, the one or more antenna panels 110 may comprise a phased array antenna including antenna elements that may be controlled to perform beamforming by varying the relative signal phase of each antenna element. In one example embodiment, system 100 may be embodied in a SL UE comprising at least two antenna panels 110. In another example embodiment, system 100 may be embodied in a vehicle, such as in a V2X environment, comprising a plurality of antenna panels, e.g., covering sides of the vehicle.

The system 100 of Figure 4 may be utilized for a variety of applications. As shown in Figure 5, for example, a communications system may include a plurality of transmitter devices (UE 202 and UE 206) and a plurality of receiver devices (UE 204 and UE 208) configured to communicate via respective transmission beams. In this regard, a transmitter device may include a transmitter configured to communicate with a receiver of a receiver device. Conversely, the receiver device not only includes a receiver, but also includes a transmitter for communicating with a receiver of the transmitter device. In this regard, Figure 5 depicts an example of a simplified system architecture only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

In the radio access architecture of Figure 5, UE 202, UE 204, UE 206, and UE 208 are configured to be in a wireless connection on one or more communication channels. Any of UE 202, UE 204, UE 206, and UE 208 may be configured to establish radio links for transmission of signals to another one of UW 202, UE 204, UE 206, and UE 208. As such, each of UE 202, UE 204, UE 206, and UE 208 may include both transmitters 12 and receivers 14. Any of UE 202, UE 204, UE 206, and UE 208 may be further connected to a base station, an access point or any other type of interfacing device including a relay station capable of operating in a wireless environment.

A UE (also called user terminal, terminal device, etc.) illustrates one type of an apparatus to which resources on an air interface are allocated and assigned, and thus any feature described herein with a UE may be implemented with a corresponding apparatus, such as a relay node.

A UE typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a UE may also be a nearly exclusive uplink only device, of which an example is a camera or video camera loading images or video clips to a network. A UE may also be a device having capability to operate in Internet of Things (IoT) network which is a scenario in which objects are provided with the ability to transfer data over a network without requiring human-to-human or human-to-computer interaction. The UE (or in some embodiments a layer 3 relay node) is configured to perform one or more of user equipment functionalities. The UE may also be called a subscriber unit, mobile station, remote terminal, access terminal, or user terminal just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Although the apparatuses have been depicted as single entities, different units, processors and/or memory units may be implemented.

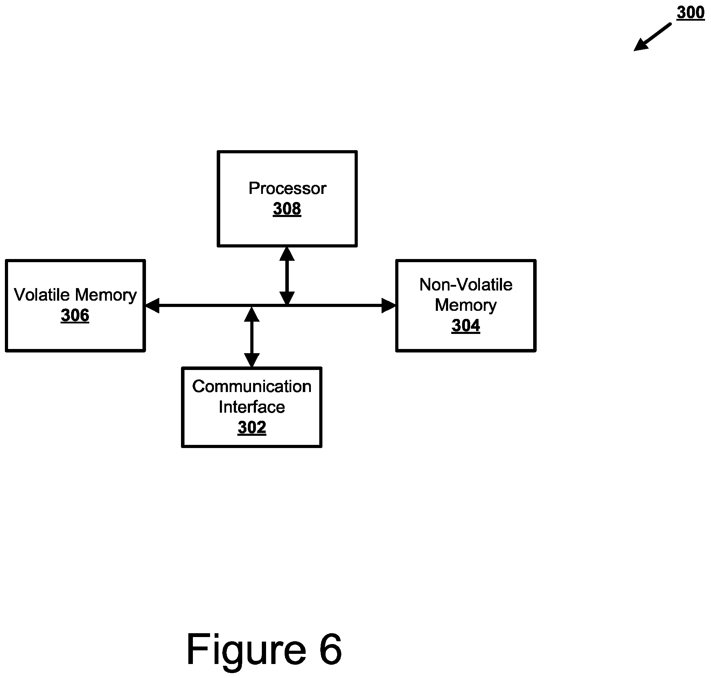

One example of an apparatus 300 that may be configured to function as the processing element 102 is depicted in Figure 6. As shown in Figure 6, the apparatus includes, is associated with or is in communication with processor 308, non-volatile memory 304, volatile memory 306, and a communication interface 302. The processor 308 may be in communication with the non-volatile memory 304 and the volatile memory 306 via a bus for passing information among components of the apparatus 300. The non-volatile memory 304 and/or the volatile memory 306 may be configured to store information, data, content, applications, instructions, or the like for enabling the apparatus 300 to carry out various functions in accordance with an example embodiment of the present disclosure. For example, the non-volatile memory 304 and/or the volatile memory 306 could be configured to buffer input data for processing by the processing circuitry. Additionally or alternatively, the non-volatile memory 304 and/or the volatile memory 306 could be configured to store instructions for execution by the processing circuitry.

Non-volatile memory 304 may comprise a non-volatile computer-readable storage medium including a floppy disk, flexible disk, hard disk, solid-state storage (SSS) (e.g., a solid state drive (SSD), solid state card (SSC), solid state module (SSM), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

Volatile memory 306 may comprise a volatile computer-readable storage medium including random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

The apparatus 300 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an example embodiment of the present disclosure on a single chip or as a single "system on a chip." As such, in some cases, a chip or chipset may constitute means for performing one or more operations for providing the functionalities described herein.

The processor 308 may comprise processing circuitry embodied in a number of different ways. For example, the processing circuitry may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processing circuitry may enable multiprocessing within a single physical package. Additionally or alternatively, the processing circuitry may include one or more processors configured in tandem via the bus to enable independent execution of instructions, pipelining and/or multithreading.

In an example embodiment, the processor 308 may be configured to execute instructions stored in the non-volatile memory 304 and/or the volatile memory 306 or otherwise accessible to the processing circuitry. Alternatively or additionally, the processing circuitry may be configured to execute hard coded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry is embodied as an executor of instructions, the instructions may specifically configure the processor to perform the algorithms and/or operations described herein when the instructions are executed. However, in some cases, the processing circuitry may be a specific device (e.g., an image or video processing system) configured to employ an embodiment of the present disclosure by further configuration of the processing circuitry by instructions for performing the algorithms and/or operations described herein. The processing circuitry may include, among other things, a clock, an arithmetic logic unit (ALU) and logic gates configured to support operation of the processing circuitry.

The communication interface 302 may be any means such as a device or circuitry embodied in either hardware or a combination of hardware and software that is configured to receive and/or transmit data, including media content in the form of video or image files, one or more audio tracks or the like. In this regard, the communication interface may include, for example, an antenna or multiple antennas, such as the one or more antenna panels 110, and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

Referring back to Figure 5, UE 202 and UE 204 may perform a beam management procedure, while UE 206 and UE 208 may perform normal SL communication. If UE 202 were to switch its transmitter beam in the middle of a slot during which UE 208 receives a transmission from UE 206, then, depending on geometry and radio propagation environment, the total receiver power at UE 208, may increase drastically during the reception of UE 206's transmission (e.g., the sum of power received from UE 202 and from UE 206), which violates the operating assumption of the SL slot format (where the total received power during the entirety of a slot is supposed to remain approximately constant), and thus impairing UE 208's reception. Moreover, if transmitter beam switching during a slot is prohibited due to such as receiver power issue, then transmitter beam switching may be only possible at slot boundaries, increasing the time taken for a full transmit beam sweep. Thus, when multiple UEs (UE 202 and UE 206) transmit in parallel without coordination, increased times for performing beam management may occur.

As used herein, the terms "sweep" or "sweeping" refer to covering a spatial area with a set of beams transmitted and received according to pre-specified intervals and directions.

Additionally, as used herein, the term "beam management" refers to a technique for estimating beamforming directions and/or determining a beam from a set of a plurality of beams to be used for pairing a transmitter device with a receiver device and for downlink and uplink transmission/reception, enabling radio and/or wireless communication between the transmitter device and the receiver device.

The 5^{th} generation technology standard, also known as "5G," specifies for broadband cellular networks, a radio access network (NG-RAN) including a radio transmitter (gNB) and an interface between a UE to the gNB, referred to as a unique user (Uu) interface. Contrary to the aforementioned problems of SL communications described with reference to the description of Figure 5, the gNB controls all its own transmissions for Uu downlinks. As such, even when a plurality of gNBs are considered, downlink transmissions received by a UE would not be affected, since the UE will normally be served by a single nearest gNB within a given cell.

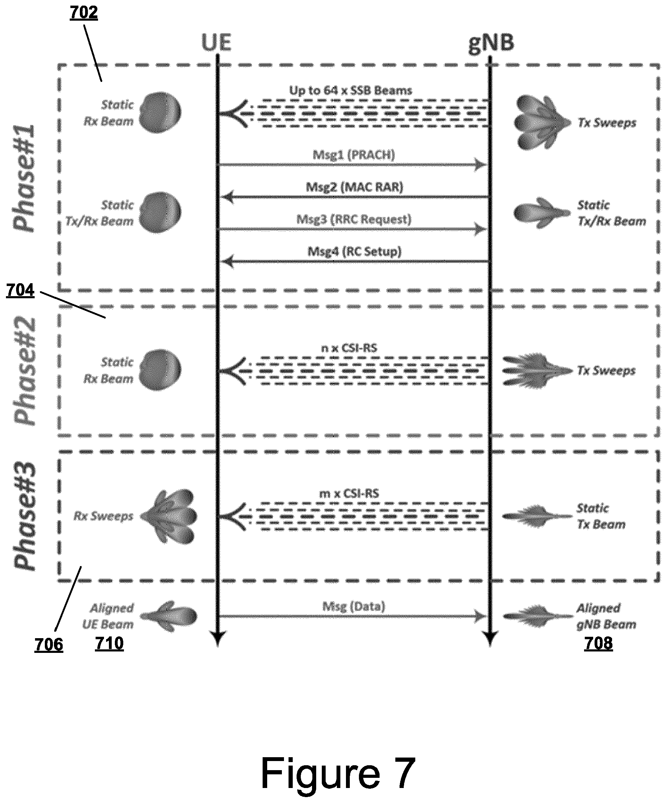

Figure 7 depicts a signal diagram of an example Uu beam alignment procedure in Uu beam management between a UE and a gNB. The example Uu beam alignment procedure comprises three phases, as depicted in Figure 7. A first phase 702 comprises a UE using a static wide receive beam while a gNB performs a Synchronization Signal (SS) burst of wide transmit beams where a plurality of Synchronization Signal Blocks (SSBs) may be swept and transmitted in different angular directions covering a cell. The first phase 702 further comprises the UE measuring Reference Signal Received Power (RSRP) for all SSB beams on all of the UE's antenna panels and sending Physical Random Access Channel (PRACH) on the Random Access Channel (RACH) occasion associated with the best SSB beam to connect to the network with a reciprocal wide transmit beam of the best SSB beam.

A second phase 704 of the example Uu beam alignment procedure comprises the UE still using the wide receive beam to receive a sweep of refined downlink Channel State Information Reference Signal (CSI-RS) beams from the gNB within the reciprocal wide transmit beam of the best SSB beam. The second phase 704 further comprises the UE measuring RSRP for all the refined CSI-RS beams and reporting the best CSI-RS beam back to gNB still using the reciprocal wide transmit beam.

A third phase 706 of the example Uu beam alignment procedure comprises the gNB repeatedly transmitting a CSI-RS with the selected best refined CSI-RS beam based on UE reporting in the second phase 704 while the UE sweeps refined receive beam settings to identify its best narrow receive beam.

Upon completing the third phase 706, alignment between gNB transmit beam 708 and UE receive beam 710 is obtained for maximized directional gain.

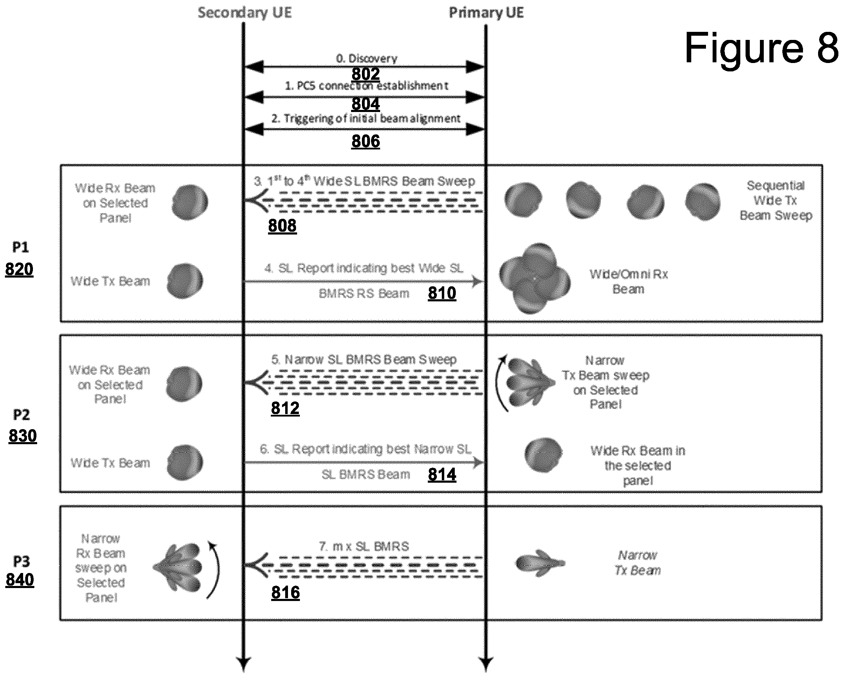

Figure 8 depicts a signal diagram of an example embodiment of a SL beam alignment procedure between two UEs, a primary UE (P-UE) and a secondary UE (S-UE). The SL beam alignment procedure depicted in Figure 8 may be patterned based on the Uu beam alignment procedure with respect to the description of Figure 7. The SL beam alignment procedure comprises a discovery procedure 802, e.g., proximity-services (ProSe) and public safety direct discovery with Model A or B. The P-UE and S-UE may establish a unicast link via a device-to-device connection using a direct communications interface, such as PC5, in procedure 804. In procedure 806, the P-UE or the S-UE triggers a beam alignment. The trigger can indicate configuration details on the beam alignment (e.g., SL Beam Management Reference Signals (SL-BMRS) format to be used, number of expected beam sweeps, and the time period where the beam sweeps are expected).

The SL beam alignment procedure further comprises a first phase 820 including procedures 808 and 810. In procedure 808, the S-UE uses a static wide receive beam on a selected S-UE antenna panel while the P-UE performs a sequential wide transmit SL-BMRS beam sweep. Each individual SL-BMRS may be transmitted in a single SL slot. For example, if four wide transmit beam sweeps are performed, then the P-UE may transmit four distinct SL slots, each with a different beam applied. In procedure 810, the S-UE reports to the P-UE the best wide transmit SL-BMRS beam (e.g., the index or slot of a SL-BMRS beam received with the higher power) with a reciprocal wide transmit beam. S-UE may refer to a beam sequence for identifying SL-BMRS beams to aid with beam alignment, such as a Beam Alignment Reference Sequence (BARS), or SL Channel State Information (CSI). The P-UE may receive the reporting using a wide/omnidirectional receive beam.

The SL beam alignment procedure also comprises a second phase 830 including procedures 812 and 814. In procedure 812, the S-UE continues to use the static wide receive beam on the selected S-UE antenna panel while the P-UE performs a narrow transmit SL-BMRS beam sweep on a selected P-UE antenna panel. In procedure 814, the S-UE uses the reciprocal wide transmit beam to report to the P-UE the best narrow transmit SL-BMRS beam. The P-UE may receive the report using a wide receive beam using the selected P-UE antenna panel.

The SL beam alignment procedure also comprises a third phase 840 including procedure 816. In procedure 816, the P-UE performs *m* number of repetitions of the SL-BMRS (e.g., repeatedly transmit) applying the selected narrow transmit SL-BMRS beam. Simultaneously, the S-UE may sweep its narrow receive beam candidates on the selected SUE antenna panel, using the SL-BMRS transmitted in the narrow transmit SL-BMRS beam by the P-UE, with the purpose of identifying the best narrow receive beam.

An example number of SL slots required for performing each phase of a SL beam alignment procedure with respect to the description of Figure 8 are provided in Table 2. For example, the steps in SL beam management for (i) initial beam-pairing may be grouped into a first phase (P1), (ii) alignment with a narrower transmit beam may be grouped into a second phase (P2), and (iii) alignment with a narrower receive beam may be grouped into a third phase (P3). As depicted in Table 2, each of these steps can be costly in terms of signaling overhead as reference signals need to be exchanged between transmitter and receiver UEs in order to complete beam alignment. Table 2 provides example signaling overhead based on a P-UE and a S-UE both equipped with two panels (each panel can generate a wide beam or one of eight narrower beams), and an assumption that a transmitter UE is restricted to apply the same transmit beamformer during a full slot, in order to avoid the occurrence of AGC issues at other receiver UEs. Furthermore, the information in Table 2 assumes that each sweep requires a full SL slot.

**Table 2**

| Phase | Tx beam/panel sweep | Rx beam/panel sweep | Total slots per phase = Tx slot x Rx slot |
|---|---|---|---|
| P1 | 2 (panel) | 2 (panel) | 4 |
| P2 | 8(narrow beam) | 1 (wide beam) | 8 |
| P3 | 1 (narrow beam) | 8 (narrow beam) | 8 |
| Total sweeps (P1+P2+P3) | | | 20 |

The depicted overhead for P1 may be based on a presence of time alignment to allow the UEs to perform panel sweep. In case there is no such alignment and all four combinations need to be established in a random manner, then the total number of panel sweeps in P1 could be on average 15. For the overhead associated with P2 and P3, from a transmit beam sweeping perspective, the use of full slot may be assumed when applying a specific beam/panel sweep to ensure that there is no AGC receive disruption at the devices in the proximity of the UE performing the beam sweep.

The number of required slots to achieve SL beam alignment between UEs as shown in Table 2 may be excessive and inefficient. Accordingly, various embodiments of the present disclosure may provide improvements to the procedure described with reference to Figure 8 to reduce the overhead associated with beam alignment. In particular, reciprocity-based beam alignment adopted for SL operation may be provided. According to some embodiments, reporting procedures for refining or completing various phases of SL beam alignment are also disclosed along with an option for triggering a transmit based beam alignment.

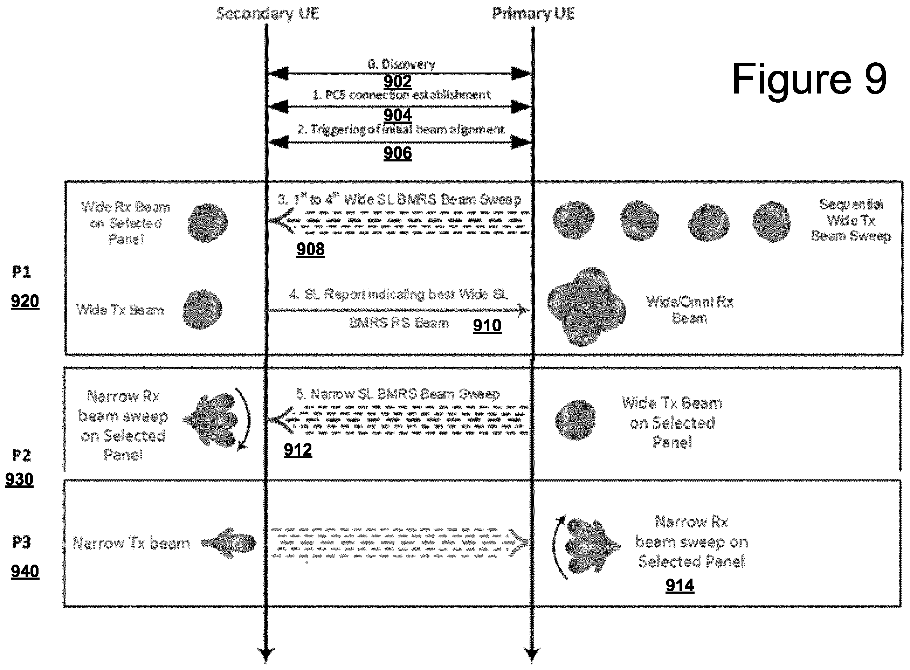

Figure 9 depicts a signal diagram of example embodiment of a reciprocity-based SL beam alignment procedure between a P-UE and a S-UE. The SL beam alignment procedure comprises a discovery procedure 902, e.g., proximity-services (ProSe) and public safety direct discovery with Model A or B.

Procedure 904 comprises the P-UE and S-UE establishing a unicast link configuration via a device-to-device connection establishment procedure, such as PC5. According to one example embodiment, the device-to-device connection establishment procedure may implement a modified PC5-Radio Resource Control (RRC) to include beam forming specific configurations, as well as UE capabilities related to beam forming and configurations of the CSI-RS configuration options for use in SL. Some examples of such modifications may include, but not limited to: indication for whether CSI-RS is enabled, indication of whether receive or transmit beam first alignment procedure is enabled, a CSI-RS configuration for CSI-RS(s) configured per slot or sub-channel for receive beam alignment (subject to UE capability of receive beam transition time and receive beam measurement time), a CSI-RS configuration for CSI-RS(s) configured per slot or sub-channel for transmission-based beam alignment sweep (subject to UE capability of transmit beam transition time), indication of whether beam forming feedback is enabled, and configuration of beam forming feedback. In some embodiments, the configuration of beam forming feedback may comprise at least one of the following options: the receive UE may not report to the transmit UE (in some embodiments, the receive UE may not report anything to the transmit UE, but may decide to request a beam alignment (realignment based on transmit beam sweeping)), the receive UE may always report beam alignment feedback, and the receive UE may only report if it determines that there is a need to transition to transmit beam sweeping. In some embodiments, the reporting may be conveyed to the transmit UE via at least one of the following options: an acknowledgement (ACK) or negative acknowledgement (NACK) in PSFCH (e.g., if receive UE found a better receive beam ACK or not NACK), explicitly signaling a best N value of RSRP and/or Reference Signal Strength Indicator (RSSI) measurements via the CSI index (e.g., reported in Media Access Control (MAC) Control Element (CE)), where *N* is a positive integer (e.g., greater than '1') and may be pre-configured or specified in a specification, and at least one Channel Quality Indicator (CQI) report (in some embodiments, if only one report, then the receive UE may report the CQI based on a best beam, otherwise for *H* number of CQI reports, the receive UE may report CQIs for the *H* best beams).

In procedure 906, the P-UE or the S-UE triggers a beam alignment. If both P-UE and S-UE support beam alignment, one of the devices (e.g., the P-UE or an initiating UE) will transmit a trigger for beam alignment. According to some embodiments, the trigger may comprise a CSI request including: a CSI-RS type (e.g., CQI, transmission-based beam alignment sweep, receive beam alignment) that instructs the S-UE (or responding UE) on CSI-RS configuration and the type of measurement), and a CSI configuration used (if more than one configuration is available, e.g., for supporting different number of CSI-RS per slot). A CQI CSI-RS type may comprise a report from the S-UE/responding UE including a CQI value and a rank indicator of which the primary UE uses to set MCS and number of transmission layers. A transmission-based beam alignment CSI-RS type may comprise a report from the primary UE including at least one or multiple indexes associated with the strongest detected beams (e.g., using CSI-RS index, explicitly, or a start/end symbol in the slot). In some embodiments, the trigger may be implicit, e.g., by configuration. For example, if both UEs support beam alignment, a first transmission from either P-UE or S-UE may comprise a trigger for beam alignment.

Triggering the beam alignment may cause performance of a first phase 920. First phase 920 includes procedures 908 and 910. In procedure 908, the S-UE uses a static wide receive beam on a selected S-UE antenna panel while the P-UE performs a sequential wide transmit SL-BMRS beam sweep. Each individual SL-BMRS may be transmitted in a single SL slot. For example, if four wide transmit beam sweeps are performed, then the P-UE may transmit four distinct SL slots, each with a different beam applied. In procedure 910, the S-UE reports to the P-UE the best wide transmit SL-BMRS beam (e.g., the index or slot of a SL-BMRS beam received with the higher power) with a reciprocal wide transmit beam. S-UE may refer to a beam sequence for identifying SL-BMRS beams to aid with beam alignment, such as a Beam Alignment Reference Sequence (BARS), or SL Channel State Information (CSI). The P-UE may receive the reporting using a wide/omnidirectional receive beam.

The SL beam alignment procedure also comprises a second phase 930 including procedure 912. In procedure 912, the S-UE sweeps its narrow receive beam candidates on the selected S-UE antenna panel while the P-UE transmits with a selected wide transmit SL-BMRS beam (e.g., based on the reported best wide transmit SL-BMRS beam) on a selected P-UE antenna panel. Procedure 912 may be performed after completing the first phase 920 or explicitly initiated by the P-UE or the S-UE. In some embodiments, the P-UE may transmit in a slot with its selected wide transmit SL-BMRS wide beam. The S-UE may measure each narrow receive beam associated to the selected wide transmit SL-BMRS beam of the P-UE. In some embodiments, when using a digital beamformer (e.g., one or more antenna panels 110, the S-UE may estimate the channel and the best narrow receive beam (this can be done on a single symbol, and may not require time multiplexing for changing beams). S-UE can measure, for example, RSRP based on CSI-RS or demodulation reference signal (DM-RS) in the slot. The number of reference signals in the slot may be known by configuration or indicated in the trigger for the beam alignment procedure.

Sweeping of its narrow receive beam candidates by S-UE may further comprise the S-UE selecting the best narrow receive beam and selecting the best transmit beam based on reciprocity. For an analog beam former, selecting the best transmit beam may comprise applying same phase shifts for the transmit beam as used for the best narrow receive beam. For a digital beamformer, selecting the best transmit beam may comprise configuring phase offsets of the transmit beam based on the best narrow receive beam.

Procedure 912 may further comprise the S-UE reporting back feedback to the P-UE based on its beam forming feedback configuration. The report content may comprise information such as a RSRP associated with one or more of the narrow receive beams of the S-UE is less than a RSRP associated with the wide transmit beam of the P-UE (e.g., after receive beam sweeping), detection of non-line-of-sight (NLOS) conditions, detection of reflections satisfying a predefined condition, a current Signal to Interference and Noise Ratio (SINR) that is less than a previous SINR (e.g., an immediately preceding SINR or one that precedes by no more than a predefined time interval), a SINR that is less than a threshold, and time conditions associated with a transmission-based beam alignment.

Based on the outcome of the sweeping of narrow receive beam candidates by SUE, the S-UE can decide whether to provide the feedback or alternatively request a restart of second phase 930 or first phase 920. In some example embodiments, based on the feedback reported from the S-UE, the P-UE may also decide whether to restart second phase 930 or first phase 920. In yet another example embodiment, even after having transmitted the feedback to P-UE, the S-UE may still decide whether to restart second phase 930 or first phase 920 and sends a request to the P-UE to restart second phase 930 or first phase 920, e.g., based on detailed information from measuring each narrow receive beam. In one example embodiments, a significant negative gain may be a trigger to restart first phase 920 rather than restarting second phase 930. A restart of first phase 920 may comprise a transmit or receive alignment. A receive alignment may be retried first when changing wide transmit beam, which may indicate a significant change in the environment or movement of the UEs. A significant negative gain may also indicate a need for restarting first phase 920 if none or very few narrow receive beams provide a marginal gain.

The SL beam alignment procedure further comprises a third phase 940 including procedure 914. Procedure 914 may be performed after completing the second phase 930 or explicitly initiated by the S-UE. In procedure 914, the P-UE sweeps its narrow receive beam candidates, while the S-UE transmits (repeatedly) with its selected narrow transmit beam. The P-UE may also measure each receive beam associated to the selected narrow transmit beam of the S-UE, for example RSP and select a best narrow receive beam. The P-UE may report back to the S-UE based on its beam forming feedback configuration. In some example embodiments, the P-UE may at least based on the receive beam measurements, and the feedback report from S-UE from second phase 930, decide whether to restart the beam alignment procedure at second phase 930, e.g., for transmit beam sweeping, consider the procedure completed, or restart the procedure at first phase 920. In another example embodiment, the P-UE may also generate a beam alignment feedback report to the S-UE. Based on the beam alignment feedback from P-UE (if present), the S-UE may decide whether to trigger a restart of second phase 930.

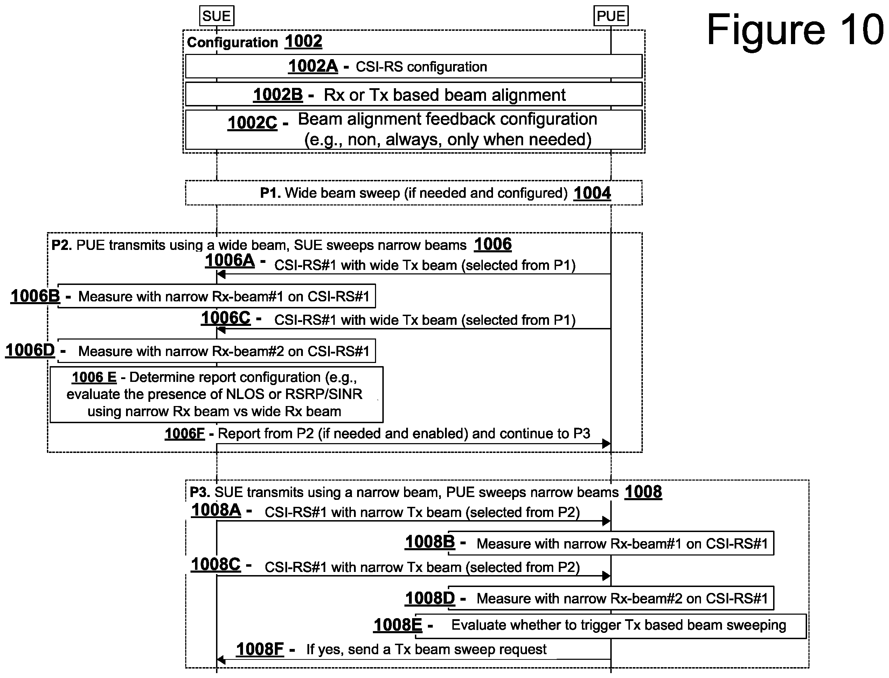

Figure 10 depicts an example data flow diagram for performing a reciprocity-based SL beam alignment procedure between a P-UE and a S-UE according to some embodiments of the present disclosure. The depicted SL beam alignment procedure comprises a configuration phase 1002. Configuration phase 1002 comprises routines, which may be executed by a P-UE and a S-UE, including CSI-RS configuration 1002A, transmit or transmit based beam alignment 1002B, and beam alignment feedback configuration 1002C. The configuration phase 1002 may comprise establishing a unicast link configuration, e.g., using a PC5 RRC procedure. CSI-RS configuration 1002A may comprise beam forming specific configurations, as well as UE capabilities related to beam forming and configurations of the CSI-RS configuration options for use in SL. Receive or transmit based beam alignment 1002B may comprise an indication of whether receive or transmit beam first alignment procedure is preferred. Beam alignment feedback configuration 1002C may comprise at least one of the following options: the receive UE not report to the transmit UE ("none"), the receive UE always report beam alignment feedback ("always"), and the receive UE only report if it determines that there is a need to transition to transmit beam sweeping ("only when needed").

In some example embodiments, both P-UE and S-UE may at any time transmit a request for beam alignment procedure via a CSI-RS request. According to the illustrated embodiment, a beam alignment procedure comprises first phase 1004, second phase 1006, and third phase 1008.

The first phase 1004 comprises a wide beam sweep. The wide beam sweep may comprise the S-UE using a static wide receive beam while the P-UE performs a wide transmit beam sweep. The S-UE may report to the P-UE the best wide transmit beam.

The second phase 1006 comprises routines performed during narrow receive beam sweeping at the S-UE while the P-UE transmits CSI-RS using the wide transmit beam selected in first phase 1004. Routine 1006A comprises P-UE transmitting CSI-RS to the S-UE during one or more slots. Routine 1006B comprises the S-UE measuring a first one of a plurality of narrow receive beams based on the CSI-RS transmitted from the P-UE. The measuring may comprise an evaluation of the quality of the CSI-RS signal using one or more metrics, such as RSRP, or SINR. Routine 1006C comprises P-UE still transmitting CSI-RS to the S-UE during the one or more slots while routine 1006D comprises the S-UE measuring a second one of the plurality of narrow receive beams. Routines 1006A, 1006B, 1006C, and 1006D are merely representative and do not depict a limitation of the number of iterations for narrow receive beam sweeping at the S-UE and additional measurements of narrow receive beams may be performed. Measurements of the narrow receive beams may be used by the S-UE in determining/selecting the best narrow receive beam and determining/selecting the best narrow transmit beam based on reciprocity.

Routine 1006E further comprises determining report configuration by the S-UE. The report configuration may determine what to report to the P-UE. The report content may comprise information such as whether a RSRP associated with one or more of the narrow receive beams of the S-UE is less than a RSRP associated with the wide transmit beam of the P-UE (e.g., after receive beam sweeping), detection of non-line-of-sight (NLOS) conditions, detection of reflections satisfying a predefined condition, a current SINR that is less than a previous SINR (e.g., an immediately preceding SINR or one that precedes by no more than a predefined time interval), a SINR that is less than a threshold, and time conditions associated with a transmission-based beam alignment. For example, a report may be transmitted to P-UE if a sufficiently strong NLOS component is detected or if a SINR gain is below a pre-configured target. Routine 1006F comprises the S-UE transmitting the report to the P-UE. In one example embodiment, the S-UE may trigger a transmission-based beam alignment sweep request instead or along with the report. In another example embodiment, based on the report content, the P-UE may also decide to trigger a transmission-based beam alignment sweep. Triggering the transmission-based beam alignment sweep may comprise restarting second phase 1006 but with a transmission-based beam alignment sweep.

According to various embodiments of the present disclosure, a transmission-based beam alignment sweep may be performed to sweep a plurality of narrow transmit beams by the S-UE rather than selecting the best narrow transmit beam based on reciprocity. In one example embodiment, a transmission-based beam alignment sweep may comprise (i) receiving a sweep comprising a plurality of secondary transmit beams from the receiver device, (ii) selecting one of the plurality of secondary transmit beams based on one or more measurements of the plurality of secondary transmit beams, and (iii) reporting the selected secondary transmit beam to the receiver device.

The third phase 1008 comprises routines performed during narrow beam sweeping at the P-UE while the S-UE transmits CSI-RS using a narrow transmit beam. Routine 1008A comprises S-UE transmitting CSI-RS to the P-UE during one or more slots. Routine 1008B comprises the P-UE measuring a first one of a plurality of narrow receive beams based on the CSI-RS transmitted from the S-UE. The measuring may comprise an evaluation of the quality of the CSI-RS signal using one or more metrics, such as RSRP, or SINR. Routine 1008C comprises S-UE still transmitting CSI-RS to the P-UE during the one or more slots while routine 1008D comprises the P-UE measuring a second one of the plurality of narrow receive beams. Routines 1008A, 1008B, 1008C, and 1008D are merely representative and do not depict a limitation of the number of iterations for narrow receive beam sweeping at the P-UE and additional measurements of narrow receive beams may be performed.

Routine 1008E comprises an evaluation performed by the P-UE to determine whether to trigger a restart of second phase 1006 with a transmission-based beam alignment sweep. Routing 1008F comprises sending or transmitting a request for a transmission-based beam alignment sweep, if the P-UE determines to trigger a restart of second phase 1006 with a transmission-based beam alignment sweep.

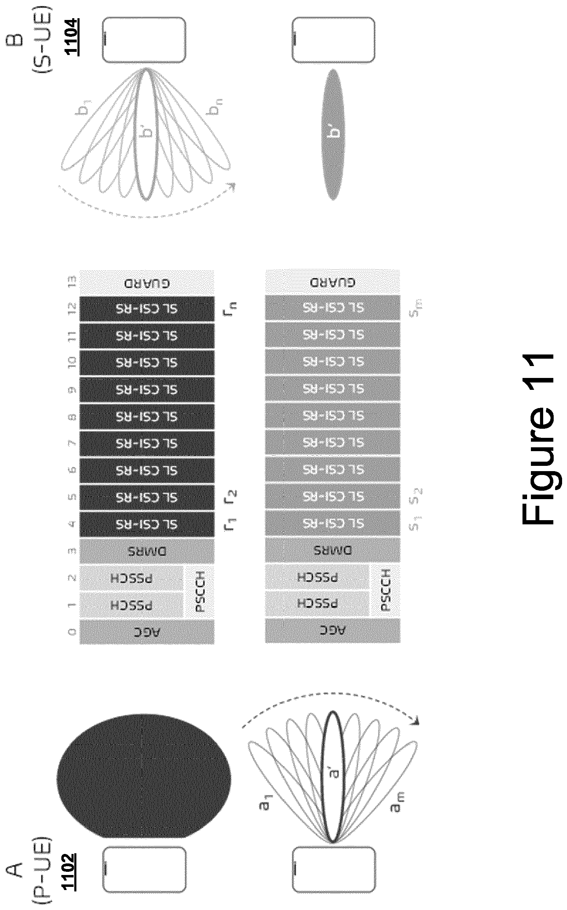

Figure 11 depicts a pair of beams used for communication between user equipment devices. A pair of beams (a', b') may be determined for communication between a first UE 1102 and a second UE 1104. In some example embodiments, the following may be performed: transmitting, by the first UE 1102, a first plurality of reference signals (r₁, ... , rₙ) to the second UE 1104; receiving, by the second UE 1104, each reference signal (rᵢ) of the first plurality of reference signals (r₁, ... , rₙ) using a corresponding beam (bᵢ) of a plurality of beams (b₁, ... , bₙ) of the second UE 1104; selecting, by the second UE 1104, a first preferred beam (b') from the plurality of beams (b₁, ... , bₙ) of the second UE 1104 based on the received first plurality of reference signals (r₁, ... , rₙ); transmitting, by the second UE 1104, a second plurality of reference signals (s₁, ... , sₘ) to the first UE 1102 using the selected first preferred beam (b'); receiving, by the first UE 1102, each reference signal (sᵢ) of the second plurality of reference signals (s₁, ... , sₘ) using a corresponding beam (a;) of a plurality of beams (a₁, ... , aₘ) of the first UE 1102; selecting, by the first UE 1102, a second preferred beam (a') from the plurality of beams (a₁, ... , aₘ) of the first UE 1102 based on the received second plurality of reference signals (s₁, ... , sₘ).

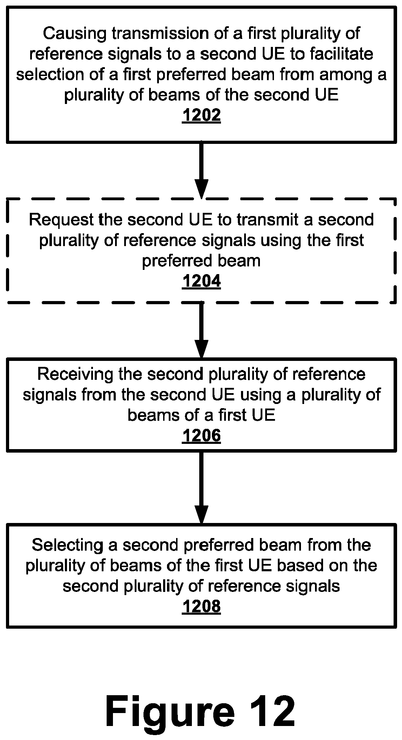

In one example embodiment and as described further below in relation to Figure 12, the following may be performed: indicating, by the first UE 1102, at least one of: whether the foregoing beam pairing procedure is to be performed, an explicit request for transmission of the second plurality of reference signals (s₁, ... , sₘ) by the second UE 1104, resources for transmission of the first plurality of reference signals (r₁, ... , rₙ) by the first UE 1102, and resources for transmission of the second plurality of reference signals (s₁, ... , sₘ) by the second UE 1104, and whether the second UE 1104 is to transmit a beam report.

In another example embodiment, the following may be performed: transmitting, by the second UE 1104, a beam report to the first UE 1102 indicating at least one of: whether the selected first preferred beam (b') is same or different compared to an earlier preferred beam (b") from the plurality of beams (b₁, ... , bₙ) of the second UE 1104, such as by providing signaling via the physical sidelink feedback channel (PSFCH), and one or more beam measurements (e.g., reference signal received power (RSRP), received signal strength indicator (RSSI), signal to interference and noise ratio (SINR), etc.) based at least on a respective received signal strength measured by the second UE 1104 on at least some of the received first plurality of reference signals (r₁, ... , rₙ), such as via a medium access control (MAC) control element (CE).

In another example embodiment, conditions for beam report may comprise whether to transmit the beam report is based on at least one of: a received signal strength measured by the second UE 1104 on at least one of the received first plurality of reference signals (r₁, ... , rₙ) is below a threshold, the second UE 1104 determines a non-line-of-sight (NLOS) channel state, the second UE 1104 determines the presence of a strong reflection, a channel quality measurement (e.g., SINR) at the second UE 1104 has changed compared to an earlier measurement beyond a threshold, and a beam report timer expires.

In one example embodiment, a transmit alignment beam sweep trigger may comprise determining, by the first UE 1102, whether to trigger a beam pairing procedure based on transmit beam sweeping based on at least one of: a beam report received from the second UE 1104, and one or more beam measurements (e.g., RSRP, RSSI, SINR) at the first UE 1102.

Referring now to Figure 12 from the perspective of the first UE 1102 of the embodiment of Figure 11, the apparatus 300 of an example embodiment includes means, such as the processor 308, the communication interface 302 or the like, for causing transmission of a first plurality of reference signals, e.g., r₁, r₂,...rₙ, to a second UE 1104 to facilitate selection of a first preferred beam b' among a plurality of beams of the second UE, e.g., b₁,...b',...bₙ, such as the beam is swept from bi to bₙ. See block 1202. The apparatus 300 of this example embodiment also includes means, such as the processor 308, the communication interface 302 or the like, for receiving a second plurality of reference signals, e.g., si, s₂,...sₘ, from the second UE 1104 using a plurality of beams, e.g., a₁,...a',...aₘ, of the first UE 1102. See block 1206. In another example embodiment, however, the request to the second UE 1104 to transmit a second plurality of reference signals, e.g., s₁, s₂,...sₘ, using the first preferred beam b' may be an explicit request that is transmitted to the second UE 1104 for transmission of the second plurality of reference signals, e.g., s₁, s₂,...sₘ. The apparatus 300 of this example embodiment also includes means, such as the processor 308 or the like, for selecting a second preferred beam a' from the plurality of beams, e.g., a₁,...a',...aₘ, of the first UE 1102, such as the beam is wept from a₁ to aₘ, based on the second plurality of reference signals, e.g., si, s₂,...sₘ. See block 1208 of Figure 12.

In an example embodiment, the apparatus may also include means, such as the processor 308, the communication interface 302 or the like, for requesting the second UE 1104 to transmit the second plurality of reference signals, e.g., s₁, s₂,...sₘ, using the first preferred beam b'. See block 1204. As the request may be implicit or explicit, this block is depicted in dashed lines to indicate its optionality. In this regard, the request for the second UE 1104 to transmit a second plurality of reference signals, e.g., s₁, s₂,...sₘ, using the first preferred beam b' may be an implicit request and, as such, need not require a specific signal to be transmitted to request the transmission of the second plurality of reference signals, e.g., s₁, s₂,...sₘ, using the first preferred beam b'.

Although Figure 12 depicts the transmission of the first plurality of reference signals, e.g., r₁, r₂,...rₙ, to the second UE 1104 to facilitate selection of the first preferred beam b' among the plurality of beams of the second UE, e.g., b₁,...b',...bₙ prior to the request for the second UE 1104 to transmit a second plurality of reference signals, e.g., s₁, s₂,...sₘ, using the first preferred beam b', these operations may be performed in either order. For example, the transmission of the first plurality of reference signals, e.g., r₁, r₂,...rₙ, to the second UE 1104 to facilitate selection of the first preferred beam b' among the plurality of beams of the second UE, e.g., b₁,...b',...bₙ may occur prior to the request for the second UE 1104 to transmit a second plurality of reference signals, e.g., s₁, s₂,...sₘ, using the first preferred beam b'. Alternatively, the request for the second UE 1104 to transmit a second plurality of reference signals, e.g., s₁, s₂,...sₘ, using the first preferred beam b' may occur prior to the transmission of the first plurality of reference signals, e.g., r₁, r₂,...rₙ, to the second UE 1104 to facilitate selection of the first preferred beam b' among the plurality of beams of the second UE, e.g., b₁,...b',...bₙ. The terms "first" and "second" when used in conjunction with the "first plurality of reference signals" and the "second plurality of reference signals" respectively, do not necessarily imply an order therebetween, as to which signals are generated, provided or transmitted prior to the other signals, or after said signals.

The apparatus 300 of an example embodiment also includes means, such as the processor 308, the communication interface 302 or the like, for providing an indication to the second UE 1104 informing the second UE 1104 that the first and second preferred beams b', a' are to be selected. The first UE 1102 may also provide one or more additional indications to the second UE 1104. For example, the apparatus 300 of an example embodiment also includes means, such as the processor 308, the communication interface 302 or the like, for providing an indication of one or more resources, e.g., orthogonal frequency division multiplexing (OFDM) symbols 4-12 in a first slot of the signals transmitted by the first UE 1102, for the transmission of the first plurality of reference signals, e.g., r₁, r₂,...rₙ. As another example, the apparatus 300 of an embodiment also includes means, such as the processor 308, the communication interface 302 or the like, for providing an indication of one or more resources e.g., OFDM symbols 4-12 in a second slot of the signals transmitted by the second UE 1104, for the transmission of the second plurality of reference signals, e.g., s₁, s₂,...sₘ. As a further example, the apparatus 300 of an embodiment also includes means, such as the processor 308, the communication interface 302 or the like, for providing an indication as to whether a beam report is to be transmitted by the second UE 1102. The beam report may indicate, such as via the PSFCH, whether the selected first preferred secondary beam is same or different compared to an earlier preferred secondary beam from the plurality of secondary beams, and/or, via the media access control (MAC) control element (CE), one or more beam measurements, e.g., RSRP, RSSI, SINR, etc., based at least on a respective received signal strength measured by the receiver device on at least some of the received first plurality of reference signals. In an example embodiment, the apparatus 300 also includes means, such as the processor 308, the communication interface 302 or the like, for causing transmission of a third plurality of reference signals based on a beam report from the second UE or based on one or more beam measurements at the first UE.

In an example embodiment, the apparatus 300 further includes means, such as the processor 308 or the like, for determining whether to transmit a third plurality of reference signals to the second UE 1104 using a corresponding plurality of beams of the first UE 1102 to facilitate selection of a third preferred beam among the plurality of beams of the first UE 1102. The transmission of the third plurality of reference signals to the second UE 1104 in this embodiment provides for fallback to transmission (TX) beam sweeping at the first UE 1102, such as in an instance in which the beam pairing procedure described above did not result in an acceptable beam pair. The apparatus 300, such as the processor 308, of this example embodiment may be configured to determine the acceptability of the beam pair determined by the beam pairing procedure described above by determining whether to transmit the third plurality of reference signals based on a beam report from the second UE 1104 and/or based on one or more beam measurements at the first UE 1102.

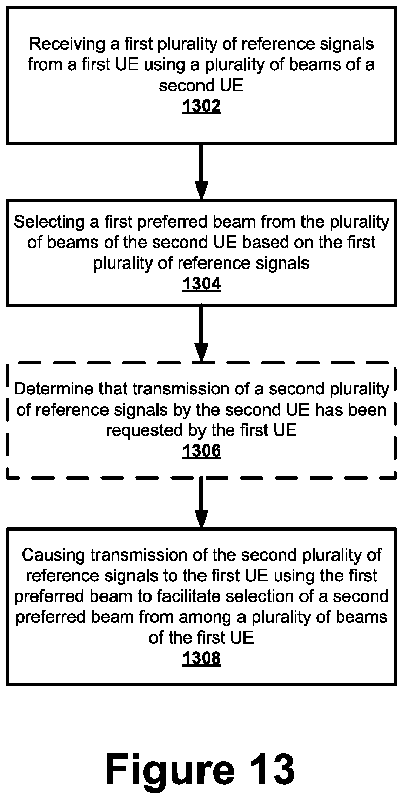

Referring now to Figure 13 from the perspective of the second UE 1104 of the embodiment of Figure 11, the apparatus 300 of an example embodiment includes means, such as the processor 308, the communication interface 302 or the like, for receiving a first plurality of reference signals, e.g., r₁, r₂,...rₙ, from the first UE 1102 using a plurality of beams, e.g., b₁,...b',...bₙ, of a second UE 1104 and means, such as the processor 308 or the like, for selecting a first preferred beam b' from the plurality of beams, e.g., b₁,...b',...bₙ, of the second UE 1104 based on the first plurality of reference signals, e.g., r₁, r₂,...rₙ. See blocks 1302 and 1304 of Figure 13. The apparatus 300 also includes means, such as the processor 308, the communication interface 302 or the like, for causing transmission of a second plurality of reference signals, e.g., s₁, s₂,...sₘ, to the first UE 1102 using the first preferred beam b' to facilitate selection of a second preferred beam a' from among a plurality of beams, e.g., a₁,...a',...aₘ, of the first UE 1102. See block 1308.

As shown in block 1306, the apparatus 300 of an example embodiment may also include means, such as the processor 308, the communication interface 302 or the like, for determining that transmission of the second plurality of reference signals, e.g., s₁, s₂,...sₙ, by the second UE 1104 has been requested by the first UE 1102. As the request may be implicit or explicit, this block is depicted in dashed lines to indicate its optionality. In this regard, the request by the first UE 1102 for the second UE 1104 to transmit a second plurality of reference signals, e.g., s₁, s₂,... sₘ, may be an implicit request and, as such, need not require a specific signal to be received by the second UE 1104 to request the transmission of the second plurality of reference signals, e.g., s₁, s₂,...sₘ. In another embodiment, however, the apparatus 300, such as the processor 308, the communication interface 302 or the like, is configured to determine that transmission of the second plurality of reference signals, e.g., s₁, s₂,...sₘ, by the second UE 1104 has been requested by receiving an explicit request from the first UE 1102 for transmission of the second plurality of reference signals, e.g., s₁, s₂,...sₘ.

The second UE 1104 may be configured to transmit a beam report to the first UE 1102. For example, the apparatus 300 of an example embodiment may further include means, such as the processor 308, the communication interface 302 or the like, for causing transmission of a beam report to the first UE 1102 to indicate whether the first preferred beam b' is same or different in comparison to a preferred beam previously selected from among the plurality of beams, e.g., b₁,...b',...bₙ, of the second UE 1104. As another example, the apparatus 399 may further include means, such as the processor 308, the communication interface 302 or the like, for causing transmission of a beam report to the first UE 1102 to indicate one or more beam measurements based at least on a received signal strength of at least some of the first plurality of reference signals, e.g., r₁, r₂,...rₙ.

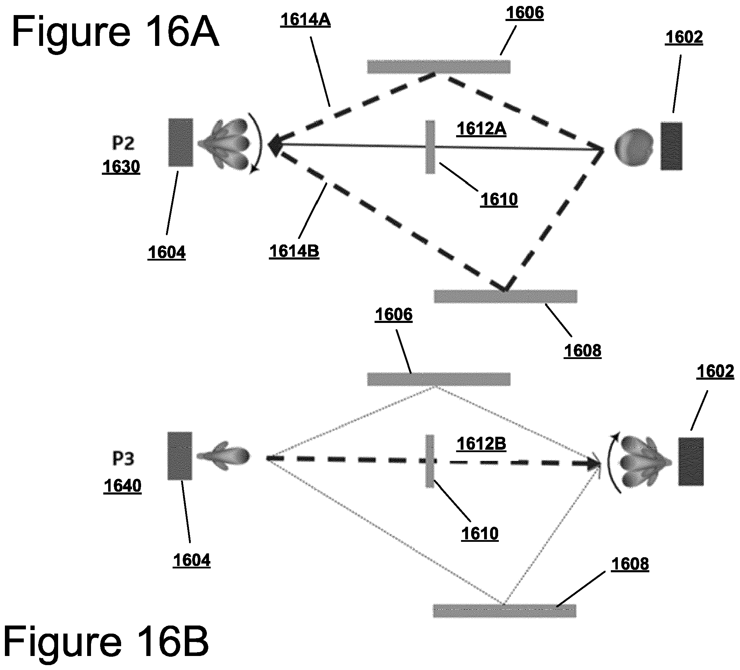

The apparatus 300 of an example embodiment further includes means, such as the processor 308 or the like, for determining whether to transmit the beam report based on at least a received signal strength of at least one of the first plurality of reference signals, e.g., r₁, r₂,...rₙ, being below a threshold. In an example embodiment, the apparatus 300 further includes means, such as the processor 308 or the like, for determining whether to transmit the beam report based on a determination of a non-line-of-sight (NLOS) channel state, such as depicted in Figure 16 in which the line of sight path is blocked, but there are strong reflectors. The apparatus 300 of an example embodiment further includes means, such as the processor 308 or the like, for determining whether to transmit the beam report based on a determination of a strong reflection, such as the presence of a reflection satisfying a predefined condition, such as a predefined reflected light intensity.

In an example embodiment, the apparatus 300 further includes means, such as the processor 308 or the like, for determining whether to transmit the beam report based on a determination as to whether a channel quality measurement at the second UE 1104 has changed by more than a threshold amount from a prior channel quality measurement. For example, in an instance in which the channel quality measurement has changed by more than the threshold amount, the beam report may be transmitted. Conversely, in an instance in which the channel quality measurement has not changed by more than the threshold amount, the beam report need not be transmitted, thereby conserving communication resources. The apparatus 300 of an example embodiment further includes means, such the processor 308 or the like, determining whether to transmit the beam report based on expiration of a beam report timer. For example, the processor 308 may maintain the beam report timer and may prevent transmission of the beam report until such time that the beam report timer has expired.

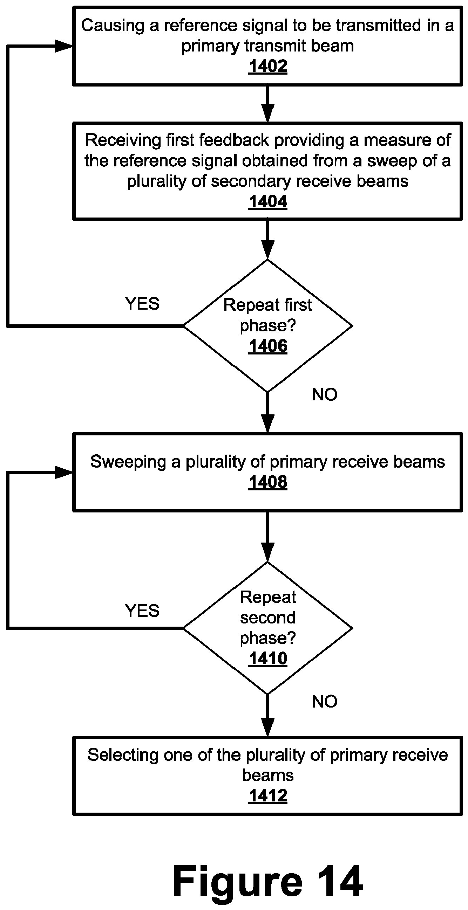

Referring now to Figure 14, transmitter operations performed in an example embodiment in order to perform a beam alignment procedure using a reciprocity-based approach for selecting best transmit and receive beams with system 100 including the transmitter 104, the receiver 106, one or more switches 108, and one or more antenna panels 110, and as a result provide for a reduction in the number of slots needed to complete beam alignment with system 100 are depicted.

As shown in block 1402 of Figure 14, the apparatus 300 includes means, such as processor 308, the communication interface 302 or the like, for causing a reference signal, such as a sidelink reference signal, to be transmitted in a primary transmit beam using at least one antenna panel 110, in the performance of a first beam alignment phase. Referring to block 1404 of Figure 14, subsequent to causing the reference signal to be transmitted, the apparatus 300 includes means, such as the processor 308, the communication interface 302 or the like, for receiving first feedback providing a measure of the reference signal obtained from a sweep of a plurality of secondary receive beams, also as part of performing the first beam alignment phase. Measuring the reference signal may comprise an evaluation of the quality of a secondary receive beam. Different metrics may be used to perform the measuring, such as RSRP or SINR.

In an example embodiment, the secondary receive beams are narrower than the primary transmit beam. Accordingly, the first feedback may be received based on a determination that the first feedback triggers a transmission-based beam alignment condition.

As shown in block 1406 of Figure 11, the apparatus 300 includes means, such as processor 308 or the like, for determining whether to repeat performance of the first beam alignment phase based on the first feedback. In an example embodiment, the first feedback comprises one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment. If the first phase is to be repeated (or restarted) based on the first feedback, the processing element 102 again, causes a reference signal to be transmitted (see block 1402 of Figure 14). In some embodiments, the first phase may be repeated as a transmission-based beam alignment based on a trigger. One example embodiment of the apparatus 300 also includes means such as processor 308, the communication interface 302 or the like, for performing transmission-based beam alignment comprising (i) receiving a sweep comprising a plurality of secondary transmit beams from the receiver device, (ii) selecting one of the plurality of secondary transmit beams based on one or more measurements of the plurality of secondary transmit beams, and (iii) reporting the selected secondary transmit beam to the receiver device.

Otherwise, as shown in block 1408 of Figure 14, the apparatus 300 includes means, such as processor 308, the communication interface 302 or the like, for sweeping a plurality of primary receive beams to measure a reference signal, such as another sidelink reference signal, that is transmitted from the receiver device in a secondary transmit beam, in the performance of a second beam alignment phase. Measuring the reference signal may comprise an evaluation of the quality of the secondary transmit beam. Different metrics may be used to perform the measuring, such as RSRP or SINR. The apparatus 300 of this example embodiment also includes means such as processor 308, the communication interface 302 or the like, for causing a second feedback to be transmitted to the receiver device based on the sweeping of the plurality of primary receive beams.

In an example embodiment, the second feedback comprises one or more of: a reference signal received power associated with one or more of the plurality of primary receive beams that is less than a reference signal received power associated with the secondary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment.

As shown in block 1410 of Figure 14, the apparatus 300 includes means, such as processor 308 or the like, for determining whether to repeat performance of the second beam alignment phase based on measurements of the uplink reference signal or the second feedback. If the second phase is to be repeated (or restarted) based on the second feedback, the processing element 102 again, causes sweeping of a plurality of primary receive beams (see block 1408 of Figure 14). In some embodiments, the second phase may be repeated as a transmission-based beam alignment based on a trigger. One example embodiment of the apparatus 300 also includes means such as processor 308, the communication interface 302 or the like, for performing transmission-based beam alignment comprising (i) receiving a sweep comprising a plurality of secondary transmit beams from the receiver device, (ii) selecting one of the plurality of secondary transmit beams based on one or more measurements of the plurality of secondary transmit beams, and (iii) reporting the selected secondary transmit beam to the receiver device.

Otherwise, as shown in block 1412 of Figure 14, the apparatus 300 includes means, such as processor 308 or the like, for selecting one of the plurality of primary receive beams based on the measurements of the plurality of primary receive beams.

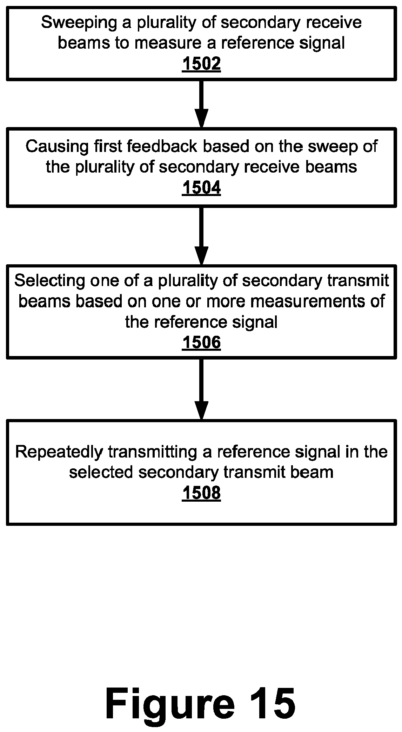

Referring now to Figure 15, receiver device operations performed in order to perform a beam alignment procedure using a reciprocity-based approach for selecting best transmit and receive beams with system 100 including the transmitter 104, the receiver 106, one or more switches 108, and one or more antenna panels 110, and as a result provide for a reduction in the number of slots needed to complete beam alignment with system 100 are depicted.

As shown in block 1502 of Figure 15, the apparatus 300 includes means, such as processor 308, the communication interface 302 or the like, for sweeping a plurality of secondary receive beams to measure a reference signal, such as a sidelink reference signal, that is transmitted by a transmitter device in a primary transmit beam, in the performance of a first beam alignment phase. In an example embodiment, the secondary receive beams are narrower than the primary transmit beam. Measuring the reference signal may comprise an evaluation of the quality of the primary transmit beam. Different metrics may be used to perform the measuring, such as RSRP or SINR.

As shown in block 1504 of Figure 15, the apparatus 300 includes means, such as processor 308, or the like, for causing first feedback based on the sweeping of the plurality of secondary receive beams to be transmitted to the transmitter device to permit determination of whether performance of the first beam alignment phase is to be repeated. One example embodiment of the apparatus 300 also includes means such as processor 308, the communication interface 302 or the like, for causing the first feedback to be transmitted based on a determination that the first feedback triggers a transmission-based beam alignment condition. The first feedback may comprise one or more of: a reference signal received power associated with one or more of the plurality of secondary receive beams that is less than a reference signal received power associated with the primary transmit beam, detection of non-line-of-sight conditions, detection of reflections satisfying a predefined condition, a current signal to interference and noise ratio that is less than a previous signal to interference and noise ratio, a signal to interference and noise ratio that is less than a threshold, and time conditions associated with a transmission-based beam alignment. In one example embodiment, the first feedback may trigger performance of a transmission-based beam alignment. One example embodiment of the apparatus 300 also includes means such as processor 308, the communication interface 302 or the like, for performing a transmission-based beam alignment comprising (i) sweeping a plurality of secondary transmit beams, and (ii) receiving an indication of a selection of one of the plurality of secondary transmit beams from the transmitter device.

As shown in block 1506 of Figure 15, the apparatus 300 includes means, such as processor 308, or the like, for selecting one of a plurality of secondary transmit beams based on one or more measurements of the reference signal using the plurality of secondary transmit beams, in performing a second beam alignment phase. One example embodiment of the apparatus 300 also includes means such as processor 308, the communication interface 302 or the like, for performing the second beam alignment phase by receiving second feedback based on the sweep of the plurality of primary receive beams. Another example embodiment of the apparatus 300 also includes means such as processor 308, the communication interface 302 or the like, for causing a trigger to be transmitted based on the second feedback to cause retransmission of the reference signal from the transmitter device in the primary transmit beam.

As shown in block 1506 of Figure 15, the apparatus 300 includes means, such as processor 308, the communication interface 302 or the like, for repeatedly transmitting a reference signal, such as another sidelink eference signal, in the selected secondary transmit beam.

As described above, a method, apparatus, receiver and system are disclosed for providing sidelink beam alignment between user equipment devices. In this regard, the method, apparatus and system are configured to perform a beam alignment procedure using a reciprocity-based approach for selecting best transmit and receive beams with system 100 including the transmitter 104, the receiver 106, one or more switches 108, and one or more antenna panels 110 so as to provide for a reduction in the number of slots needed to complete beam alignment. In this regard, the method, apparatus and system are configured to reduce the number of slots used for faster beam alignment between user equipment devices and thus improving communication speeds between the user equipment devices.

Figures 12-15 are flowcharts depicting methods according to an example embodiment of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by volatile memory 306 and/or non-volatile memory 304 of an apparatus employing an embodiment of the present disclosure and executed by a processor 308. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Figure 16A and 16b depict a diagram of SL beam alignment in the presence of obstructions. In certain instances, environmental conditions may not be suitable for performing the second and third phases of the disclosed reciprocity-based SL beam alignment procedure due to the narrow transmit beam being selected by a receiver device (e.g., S-UE) based on a wide transmit beam (e.g., P-UE) of a transmitter device. An example is depicted in Figures 16A and 16B, where two side reflectors 1606 and 1608 are located on either side between a P-UE 1602 and a S-UE 1604. Additionally, line-of-sight between P-UE 1602 and SUE 1604 is blocked by an obstacle 1610 but attenuated signals 1612A and 1612B can still be propagated through obstacle 1610.

During second phase 1630, a wide beam may be transmitted from P-UE 1602. The S-UE 1604 may measure reflected signals when sweeping its narrow receive beams. In particular, signal 1612A may receive constructive signal gain from signals (1614A and 1614B) from the two side reflectors 1606 and 1608. Assuming that the sum of signals 1612A, 1614A, and 1614B are stronger than any of the signals individually, the S-UE may select a best narrow receive beam and select narrow transmit beam based on the signal 1612A with the blocked line-of-sight path. However, this presents a problem during third phase 1640 where the selected narrow transmit beam is a beam that is directed at the obstacle 1610. The result can be that the selected beam pair is suboptimal, and might had been better using a narrow beam pointing towards one of the side reflectors 1606 and 1608 or even using a wide beam.

The obstruction problem may be solved by performing a transmission-based beam alignment sweep, which despite being more time consuming (and energy), can provide a better beam pair. According to various embodiments of the present disclosure, a transmission-based beam alignment sweep may be performed to sweep a plurality of narrow transmit beams by the S-UE rather than selecting the best narrow transmit beam based on reciprocity. A transmission-based beam alignment sweep may be requested or initiated by either a S-UE or a P-UE, for example, by requesting a beam alignment procedure to be redone with a transmit beam sweep instead of receive beam sweep.

Benefits of the disclosed reciprocity-based SL beam alignment procedure are provided in Table 3. In particular, Table 3 quantifies the number of slots required in the disclosed reciprocity-based beam alignment procedure, which provides a reduced number of slots needed to complete beam alignment in the second and third phases.

**Table 3**

| Phase | Tx beam/panel sweep | Rx beam/panel sweep | Total slots per phase = Tx slot x Rx slot |
|---|---|---|---|
| P1 | 2 (panel) | 2 (panel) | 4 |
| P2 | 1 (wide beam) | 1 (8 narrow beam) | 1 |
| P3 | 1 (narrow beam) | 1 (8 narrow beam) | 1 |
| Total sweeps (P1+P2+P3) | | | 6 (70% reduction from 20) |

Many modifications and some embodiments of the present disclosure set forth herein will come to mind to one skilled in the art to which these embodiments pertain having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims.

Moreover, although the foregoing descriptions and the associated drawings describe some embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
means for causing transmission, by a first user equipment -UE-, of a first plurality of reference signals to a second UE to facilitate selection of a first preferred beam among a plurality of beams of the second UE;
means for receiving a second plurality of reference signals from the second UE using a plurality of beams of the first UE; and
means for selecting a second preferred beam from the plurality of beams of the first UE based on the second plurality of reference signals.

2. An apparatus according to claim 1 further comprising means for providing an indication to the second UE informing the second UE that the first and second preferred beams are to be selected.

3. An apparatus according to any of claims 1 or 2 wherein the means for requesting the second UE to transmit the second plurality of reference signals comprises means for causing transmission of an explicit request to the second UE for transmission of the second plurality of reference signals.

4. An apparatus according to any of claims 1 or 2 wherein the second plurality of reference signals are received from the second UE without transmission of an explicit request.

5. An apparatus according to any of claims 1-4 further comprising means for providing an indication of one or more resources for the transmission of the first plurality of reference signals.

6. An apparatus according to any of claims 1-5 further comprising means for providing an indication of one or more resources for the transmission of the second plurality of reference signals.

7. An apparatus according to any of claims 1-6 further comprising means for providing an indication as to whether a beam report is to be transmitted by the second UE.

8. An apparatus according to claim 7 wherein the beam report indicates at least one of: whether the first preferred beam is same or different compared to another preferred beam that was previously selected, or one or more beam measurements based at least on a respective received signal strengths.

9. An apparatus according to any of claims 1-8 further comprising means for causing transmission of a third plurality of reference signals based on at least one of:
- a beam report from the second UE; or
- one or more beam measurements at the first UE.

10. An apparatus comprising:
means for receiving a first plurality of reference signals from a first user equipment - UE- using a plurality of beams of a second UE;
means for selecting a first preferred beam from the plurality of beams of the second UE based on the first plurality of reference signals; and
means for causing transmission of a second plurality of reference signals to the first UE using the first preferred beam to facilitate selection of a second preferred beam from among a plurality of beams of the first UE.

11. A method comprising:
causing transmission, by a first user equipment -UE-, of a first plurality of reference signals to a second UE to facilitate selection of a first preferred beam among a plurality of beams of the second UE;
receiving a second plurality of reference signals from the second UE using a plurality of beams of the first UE; and
selecting a second preferred beam from the plurality of beams of the first UE based on the second plurality of reference signals.

12. A method comprising:
receiving a first plurality of reference signals from a first user equipment -UE- using a plurality of beams of a second UE;
selecting a first preferred beam from the plurality of beams of the second UE based on the first plurality of reference signals; and
causing transmission of second plurality of reference signals to the first UE using the first preferred beam to facilitate selection of a second preferred beam from among a plurality of beams of the first UE.

13. A non-transitory computer readable storage medium comprising computer instructions that, when executed by an apparatus, cause the apparatus to:
cause transmission, by a first user equipment -UE-, of a first plurality of reference signals to a second UE to facilitate selection of a first preferred beam among a plurality of beams of the second UE;
receive a second plurality of reference signals from the second UE using a plurality of beams of the first UE; and
select a second preferred beam from the plurality of beams of the first UE based on the second plurality of reference signals.

14. A non-transitory computer readable storage medium comprising computer instructions that, when executed by an apparatus, cause the apparatus to:
receive a first plurality of reference signals from a first user equipment -UE- using a plurality of beams of a second UE;
select a first preferred beam from the plurality of beams of the second UE based on the first plurality of reference signals; and
cause transmission of a second plurality of reference signals to the first UE using the first preferred beam to facilitate selection of a second preferred beam from among a plurality of beams of the first UE.

15. An apparatus according to any of claims 1-11, further comprising at least one antenna panel.
